# EUROPÄISCHE PATENTSCHRIFT

(11) **EP 2 407 071 B1**
(45) Veröffentlichungstag und Bekanntmachung des Hinweises auf die Patenterteilung: **24.09.2014**
(21) Anmeldenummer: 11172953.9
(22) Anmeldetag: 07.07.2011
(51) Int. Cl.: A47J 43/07, A47J 43/10

(54) **Elektromotorisch betriebene Küchenmaschine**
Kitchen appliance operated by electric motor
Appareil ménager fonctionnant avec un moteur électrique

(30) Priorität: 13.07.2010 DE 102010036372; 05.10.2010 DE 102010037977
(43) Veröffentlichungstag der Anmeldung: 18.01.2012
(73) Patentinhaber: Vorwerk & Co. Interholding GmbH, 42275 Wuppertal (DE)
(72) Erfinder: Arnold, Hans-Peter, 58566 Kierspe (DE); Braun, Thomas, 42327 Wuppertal (DE); Jacobs, Carsten, 42477 Radevormwald (DE)
(74) Vertreter: Müller, Enno

(56) Entgegenhaltungen:
- EP-A1- 1 702 545
- EP-A2- 2 220 981

## Beschreibung

Die Erfindung betrifft eine elektromotorisch betriebene Küchenmaschine nach den Merkmalen des Oberbegriffes des Anspruches 1 bzw. des Anspruches 2.

Küchenmaschinen der in Rede stehenden Art sind bekannt. Diese weisen einen von der Küchenmaschine, weiter insbesondere von einer Aufnahme abnehmbaren Rührtopf auf, in welchem ein um eine im Betrieb vertikal ausgerichtete Achse drehbares Rührwerk angeordnet ist. Dieses dient beispielsweise der Vermengung, weiter beispielsweise je nach Auslegung des Rührwerkes zur Zerkleinerung des in dem Rührtopf aufgenommenen Rührgutes. Das Rührwerk wird über einen maschinenseitigen Elektromotor angetrieben, wozu an der Schnittstelle zwischen Rührtopf und geräteseitiger Aufnahme eine Kupplung vorgesehen ist. Zur drehmitnehmenden Kupplung der maschinenseitigen Antriebswelle und der rührtopfseitigen Abtriebswelle sind die entsprechenden Kupplungsabschnitte der Wellen im Querschnitt unrund ausgebildet, weiter beispielsweise einen sternförmigen Querschnitt aufweisend, wobei zumindest im Rührbetrieb eine Formschlussmitnahme erreicht ist.

Beispiele für den Stand der Technik finden sich in der nachveröffentlichten EP 2 220 981 v. 25.8.2010 oder in der EP 1 702 545 vom 20.9.2006.

Im Hinblick auf den vorbeschriebenen Stand der Technik stellt sich der Erfindung die Aufgabe, eine Küchenmaschine der in Rede stehenden Art hinsichtlich der Kupplungsausgestaltung weiter zu verbessern.

Diese Aufgabe ist zum einen beim Gegenstand des Anspruches 1 gelöst, wobei darauf abgestellt ist, dass die An- oder Abtriebswelle im Kupplungsbereich eine in Umfangsrichtung mindestens zweistufig wirkende Dämpfungseinrichtung aufweist, wobei die zweite, nach Überschreiten eines bestimmten Drehmoments in Wirkung kommende Stufe steifer ausgelegt ist als die erste Stufe, dass ein die erste Stufe bildendes Element sich nur über einen Teilbereich des Umfangs der An- oder Abtriebswelle erstreckt und dass das die erste Stufe bildende Element eine größere Vertikalerstreckung als Umfangserstreckung aufweist.

Die Aufgabe ist auch durch den Gegenstand des Anspruches 2 gelöst, wobei darauf abgestellt ist, dass die An- oder Abtriebswelle im Kupplungsbereich eine in Umfangsrichtung mindestens zweistufig wirkende Dämpfungseinrichtung aufweist, wobei die zweite, nach Überschreiten eines bestimmten Drehmoments in Wirkung kommende Stufe steifer ausgelegt ist als die erste Stufe und das die erste Stufe bildende Element unter Übernahme der Außenkontur jedenfalls in vertikaler Richtung, parallel zu einer Achse der Antriebswelle, des die zweite Stufe bildenden Elements der Dämpfungseinrichtung, wenn auch zumindest teilweise in radialer Richtung vergrößert bzw. verkleinert, zumindest einen Teil der Höhe der An- und/oder Abtriebswelle im Kupplungsbereich ausbildet.

Zufolge dieser Ausgestaltung ist ein möglicher Mittenversatz der Achsen von An- und Abtriebswelle durch ein differenziert wirkendes Dämpfungselement ausgeglichen, welches in einer ersten Stufe auf einen Betriebszustand mit geringer Last ausgelegt ist, die zufolge der steifer ausgelegten zweiten Stufe bei hohen Betriebslasten keiner Schädigung ausgesetzt ist. Entsprechend wird zufolge der mindestens zweistufig wirkenden Dämpfungseinrichtung in selbstorganisierender Art und Weise die Dämpfungshärte in der Kupplungsmitnahme dem jeweiligen Lastzustand angepasst. Zufolge der Erstreckung des die erste Stufe bildenden Elements lediglich über einen Teilbereich des Umfangs der das Element aufweisenden An- oder Abtriebswelle bzw. zufolge der zumindest teilweisen Übernahme der Außenkontur des die zweite Stufe bildenden Elements bei zumindest teilweiser radialer Vergrößerung bzw. Verkleinerung des Elements der ersten Stufe ist ein reibungsarmes bis reibungsfreies Fügen und Trennen der Kupplungspartner erreichbar. Insbesondere letztgenanntes Merkmal ist jedoch zu dem insoweit vorstehend beschriebenen Konzept auch optio-nal zu sehen. Es kann auch in Wegfall kommen. Weiter ist zufolge der Anordnung des die erste Stufe bildenden Elements ein reibungsfreier Lastwechsel durchführbar. So ist weiter bevorzugt, dass das die erste Stufe bildende Element so angeordnet und ausgebildet ist, dass dieses lediglich im entsprechenden Lastfall allein mit dem diesem Element zugeordneten Bereich der Gegenwelle bevorzugt reibungsfrei zusammenwirkt. Der Verschleiß insbesondere der im Lastzustand beaufschlagten Zone des die erste Stufe bildenden Elements ist zufolge der vorbeschriebenen Anordnung minimiert, was entsprechend zu einer erhöhten Nutzungsdauer des die erste Stufe bildenden Elements führt. Bei Ausgestaltung des Elements zur Bildung der ersten Stufe unter zumindest teilweiser Übernahme der Außenkontur des die zweite Stufe bildenden Elements ist eine insgesamt zumindest annähernd homogene Ausgestaltung der An- und/oder Abtriebswelle im Kupplungsbereich gegeben. Die Übernahme der Außenkontur ist hierbei jedenfalls in vertikaler, das heißt in achsparalleler Ausrichtung zur Welle gegeben, ggf. auch kombinativ hierzu in Umfangsrichtung, wobei weiter das Element der ersten Stufe in einem quer zur Wellenachse betrachteten Querschnitt zumindest teilweise den radial äußeren bzw. radial inneren Verlauf der Kontur des Elements der zweiten Stufe nachbildet, dies weiter bevorzugt unter zumindest teilweiser Vergrößerung bzw. Verkleinerung in radialer Richtung. Weiter ist bevorzugt die Übernahme gegebenenfalls nur in dem Bereich vorgesehen, der in Kupplungsstellung bzw. Belastungsstellung tatsächlich zur Anlage kommt.

Die zweite Stufe ist bevorzugt durch eine die An- oder Abtriebswelle selbst bildende Struktur gegeben. Entsprechend ist bevorzugt die zweite Stufe gebildet durch unmittelbare Anlage von miteinander wirkender Strukturabschnitte der An- und Abtriebswelle, womit bei entsprechender Materialauslegung der Wellen bzw. der miteinander wirkenden Strukturabschnitte höchste Lasten übertragen werden können. Die erste Stufe der Dämpfungseinrichtung ist in der steifer ausgelegten, das heißt eine geringere Elastizität als die erste Stufe aufweisenden zweiten Stufe nicht bzw. nicht materialschädigend beansprucht. Zudem ist die vorgeschlagene Dämpfungseinrichtung bevorzugt so ausgelegt, dass nur Kräfte in Umfangsrichtung übertragen werden. Dementsprechend ist eine allein radial wirkende Dämpfungseinrichtung vorgeschlagen, die in Wirkung tritt zufolge einer Relativverlagerbarkeit der Wellen in Umfangsrichtung um ihre Wellenachsen.

Die Dämpfungseinrichtung ist in einer Ausgestaltung unlösbar mit der An- oder Abtriebswelle befestigt, beispielsweise durch Herstellung der jeweiligen Welle im Zweikomponenten-Verfahren. Die erste Stufe der Dämpfungseinrichtung ist gegenüber der zweiten Stufe weicher, weiter elastischer eingestellt. So ist weiter bevorzugt die erste Stufe durch Anordnung einer Weichzone gebildet, weiter insbesondere durch ein die erste Stufe bildendes Element, während die zweite Stufe durch Strukturabschnitte der Welle selbst gebildet ist. Die Weichkomponente bzw. das Element besteht hierbei weiter beispielsweise aus einem Gummimaterial oder einem Weichkunststoff wie TPE. Auch die zweite Stufe bzw. jede weitere Stufe der Dämpfungseinrichtung kann aus einem derartigen elastischen Material bestehen, wobei jedoch die Dämpfungseigenschaften, weiter die Elastizität dieser weiteren Stufen stets gegenüber der vorgeschalteten Stufe härter eingestellt ist.

In weiterer Ausgestaltung ist das die erste Stufe bildende Element mit dem die zweite Stufe bildenden Abschnitt beispielsweise steckverbunden und/oder klebeverbunden.

Es ist vorgesehen, dass das die erste Stufe bildende Element eine größere Vertikalerstreckung als Umfangserstreckung aufweist. Die vorbezeichnete Umfangserstreckung bezieht sich hierbei im Wesentlichen auf das Erstreckungsmaß in einer quer zur Wellenachse sich erstreckenden Querschnittsebene, weiter insbesondere auf das Erstreckungsmaß eines wirksamen Abschnitts des die erste Stufe bildenden Elements, entsprechend weiter bevorzugt ohne Berücksichtigung von Elementabschnitten, die insbesondere der Festlegung des Elementes an der zugeordneten An- oder Abtriebswelle dienen. Die Vertikalerstreckung bezieht sich hierbei weiter bevorzugt auf ein Erstreckungsmaß parallel zu der Wellenachse.

Die beiden Kupplungsteile der An- und Abtriebswelle weisen bevorzugt umfangsmäßig unterschiedliche Konturen auf, die jeweils bezüglich einer gedachten Kreislinie über den Umfang gleichmäßig wechselnd verlaufen unter Ausbildung von Minimal- und Maximalabstandsbereichen, wobei das Element der ersten Stufe in einem Umfangsüberdeckungsbereich der An- oder Abtriebswelle angeordnet ist, wobei weiter jedoch in den Minimal- und Maximalabstandsbereichen keine Anlage des Elements der ersten Stufe erfolgt. Zufolge der entsprechenden Konturierung von An- und Abtriebswelle ist eine Kupplungsmitnahme in Umfangsrichtung, das heißt weiter in Drehrichtung der Welle gegeben. Die Konturen von An- und Abtriebswelle sind unterschiedlich gebildet, weisen hierbei über den Umfang betrachtet beispielsweise sich aneinander reihende Wellentäler und Wellenberge auf, wobei insbesondere in die Wellentäler der einen Welle die Wellenberge der anderen Welle eintauchen. Die unterschiedliche Konturierung ist hierbei beispielsweise dadurch gegeben, dass eine radial innere Welle einen gleichmäßigen, stufenlosen Übergang zwischen den Bereichen von Wellentälern und Wellenbergen aufweist, mit nach radial außen gerichteten Wellenbergen, während die radial äußere Welle beidseitig der nach radial außen weisenden Wellentäler anschließende Tangentialabschnitte aufweisen, die in einem gegenüber den Wellentälern im Rundungsradius wesentlichen kleineren Wellenberg münden. Zum reibungsfreien Fügen und Trennen der Kupplung sind in der Kupplungsstellung die zugewandten Oberflächen von An- und Abtriebswelle zueinander beabstandet, wobei zufolge der unterschiedlichen umfangsmäßigen Kontur der Wellen dieser Abstand über den Umfang betrachtet nicht gleichmäßig ist. In diesem Umfangsabstandsbereich bzw. Umfangsüberdeckungsbereich der An- oder Abtriebswelle ist das Element der ersten Stufe angeordnet, wobei im Lastfall, weiter bevorzugt sowohl in einem lastarmen Zustand als auch in einem Hochlastbetrieb dieses Element lediglich mit einem sich zwischen einem Minimal- und einem Maximalabstandsbereich, das heißt weiter in einem Bereich zwischen einem Wellental und einem Wellenberg der Gegenwelle im Lastzustand abstützt, so weiter bei einer bevorzugten Anordnung des Elements an der radial inneren Welle unter Abstützung im vorbeschriebenen Tangentialbereich zwischen Wellental und Wellenberg der radial äußeren Welle.

Weiter bevorzugt ist das Element der ersten Stufe in einem Bereich angeordnet, in welchem die zugeordneten Flanken von An- und Abtriebswelle sich über den Einfederungsbereich des Elements der ersten Stufe praktisch nicht relativ zueinander verschieben, so weiter bevorzugt insbesondere bezüglich einer Relativverschiebung in Umfangs- bzw. in Drehrichtung der Welle. Dies lässt einen reibungsfreien Lastwechsel zu. Die Relativbewegungen der zugeordneten Flanken von An- und Abtriebswelle verlagern sich im Zuge der Belastung des die erste Stufe bildenden Elements praktisch nahezu in einer Richtung aufeinander zu, ohne hierbei eine wesentliche, reibungsintensiv auf das Element wirkende Relativdrehbewegung zueinander zu vollziehen, wenngleich eine solche relative Drehbewegung in Umfangsrichtung der zugeordneten Flanken zueinander in einem Maß erfolgen kann, welches keinen oder vernachlässigbaren Reibwiderstand zwischen dem Element und der zugeordneten Flanke im Zuge des Einfederns zulässt. Insbesondere durch eine entsprechend bevorzugt elastische Ausgestaltung des die erste Stufe ausbildenden Elements kann eine derartige Relativschwenkbewegung der zugeordneten Flanken zueinander bzw. des Elements zu der zugeordneten Flanke der Gegenwelle reibungsarm bis hin zu reibungsfrei kompensiert werden, wobei weiter bevorzugt Schwenkwinkelbereiche im Einfederungsbereich von 0,5° bis 2° über den Einfederungsweg des Elements der ersten Stufe bis zur Drehmitnahme-Anlagestellung der zweiten Stufe im Hochlastbetrieb gegeben sein können.

Zudem erfolgt bevorzugt die Berührung zwischen dem Element der ersten Stufe und einem Gegenbereich der jeweils anderen Welle im Wesentlichen bezogen auf eine Halterung des Elements in Unterstützung der Halterung zentral, das heißt bei einer Verklebung senkrecht zur Klebefläche oder bei einer Steckhaltung derart, dass Druckkräfte auf den Steckvorsatz ausgeübt werden. So ergeben sich im das Element der ersten Stufe beeinflussenden Lastfall keine insbesondere die Halterung des Elements gegebenenfalls beeinträchtigende Scherkräfte, insbesondere Kräfte, die in Umfangsrichtung bzw. Drehrichtung der Welle auf das Element einwirken könnten. Auch dies erhöht die Nutzungsdauer des die erste Stufe bildenden Elements. Die Verschleißanfälligkeit des Elements ist auf ein Minimum bis hin gegen Null reduziert. Die auf das Element im Lastfall einwirkenden Druckkräfte werden bevorzugt in Richtung auf die Festlegungszone des Elements gerichtet, dies weiter gegebenenfalls unter Unterstützung der Halterung des Elements.

Bevorzugt ist das Element der ersten Stufe streifenförmig, parallel zur Wellenachse verlaufend angeordnet, weiter bevorzugt mit einer Längserstreckung des Streifens, die größer ist als die Erstreckung des Elements in Umfangsrichtung, weiter bevorzugt eine parallel zur Wellenachse betrachtete Länge aufweisend, die dem 2,5- bis 10-Fachen, weiter bevorzugt dem 4- bis 6-Fachen der Umfangserstreckung des Elements entspricht.

Das Element der ersten Stufe ist bevorzugt im nicht beanspruchten Zustand mit Überstand zu umgebenden Bereichen der zweiten Stufe ausgebildet, so weiter insbesondere mit, mit Bezug zur Wellenachse, radialem Überstand, so dass im Lastfall, in welchem eine Relativverlagerung von An- und Abtriebswelle im Umfangsrichtung vorliegt, zielgerichtet zunächst das Element der ersten Stufe zur Anlage kommt. Das Überstandsmaß beträgt in bevorzugter Ausgestaltung 0,2 mm bis 1 mm, weiter bevorzugt 0,4 mm bis 0,5 mm.

Weiter bevorzugt ist das Element der ersten Stufe von einem Ausdehnungsfreiraum umgeben, in das das Element bei Beanspruchung, das heißt im Lastfall zumindest teilweise ausweichen kann, dies bevorzugt je nach Größe der auf das Element einwirkenden Druckkraft im Lastfall. Der Ausdehnungsfreiraum ist hierbei zumindest so groß bemessen, dass in einem Hochlastbetrieb, in welchem die zweite und somit härtere Stufe zur Anlage kommt zumindest der zum umgebenden Bereich überstehende Abschnitt des Elements vollständig in den Ausdehnungsfreiraum eintauchen kann, so dass entsprechend in einem derartigen Hochlastbetrieb das Element der ersten Stufe keinen Überstand zu dem umgebenden Bereich aufweist. Der umgebende Bereich bildet entsprechend bevorzugt die zweite Stufe, wobei weiter entsprechend der Ausdehnungsfreiraum in dem steifer ausgelegten Bereich, das heißt im Bereich der zweiten Stufe der Dämpfungseinrichtung ausgebildet ist.

Weiter bevorzugt ist eine Vielzahl von Elementen der ersten Stufe in Umfangsrichtung der An- oder Abtriebswelle verteilt angeordnet, so weiter bevorzugt derart, dass die Elemente symmetrisch beidseitig zu einer durch steifer ausgelegte und die zweite Stufe ausformende Bereiche gehenden Radialen angeordnet sind, so dass jeweils ein Element der ersten Stufe je nach Drehrichtung der Welle zuerst in Anlage zu der Gegenwelle tritt. Weiter bevorzugt sind die Elemente insbesondere in ihrer Anzahl angepasst an die umfangsmäßige Konturierung der An- und Abtriebswelle vorgesehen, weiter bevorzugt bei Anordnung der Elemente an der radial inneren Welle jeweils zugeordnet einem sich an einem Wellental anschließenden Tangentialabschnitt zugeordnet.

Das Element der ersten Stufe ist in einer weiter bevorzugten Ausgestaltung zugeordnet einer Mitnehmerspitze als Hohlstruktur ausgebildet, wodurch die gewünschte elastische Nachgiebigkeit dieses Elements bei Überschreiten einer vorgegebenen Belastung weiter unterstützt ist. Bevorzugt ist diesbezüglich weiter das Element der ersten Stufe, aufweisend einen vertikal durchgehenden Hohlraum, beispielsweise schlauchartig ausgebildet, wobei weiter bevorzugt über den Umfang eines derartig schlauchartig ausgebildeten Elements betrachtet ein Teilabschnitt zur Anlage an einem Gegenabschnitt des anderen Wellenteiles ausgebildet ist, während der weitere Schlauchabschnitt zur Festlegung des so gebildeten ersten Elements an dem zweiten, steifer ausgelegten Element ausgeformt ist.

Die Elemente der ersten und zweiten Stufe sind in einer bevorzugten Ausgestaltung miteinander steckverbunden, sind weiter bevorzugt entsprechend als gesonderte Teile zunächst hergestellt, beispielsweise im Kunststoffspritzverfahren, wobei weiter bevorzugt insbesondere das Element der zweiten Stufe eine entsprechend ausgeformte Steckaufnahme für das Element der ersten Stufe aufweist. Hierbei ist weiter bevorzugt das Element der ersten Stufe nach entsprechender Steckverbindung mit dem Element der zweiten Stufe kraft- bzw. reibschlüssig gehalten, darüber hinaus gegebenenfalls mit dem Element der zweiten Stufe verrastet. Die bevorzugte Steckrichtung ist vertikal, das heißt parallel verlaufend zu der Wellenachse, womit die Steckrichtung quergerichtet ist zur Belastungsrichtung in der Kupplungsstellung. Darüber hinaus ist auch eine mit Bezug auf die Wellendrehachse radiale Steckrichtung möglich.

Weiter alternativ sind die Elemente der ersten und zweiten Stufe im Zwei-Komponenten-Spritzverfahren ausgebildet, womit entsprechend der so gebildete Kupplungsbereich der An- und/oder Abtriebswelle insgesamt einteilig gebildet ist. Die Elemente der ersten und zweiten Stufe sind bevorzugt nicht zerstörungsfrei trennbar.

In einer Ausgestaltung ist die Übernahme der Außenkontur des die zweite Stufe bildenden Elements durch das Element der ersten Stufe erreicht zufolge über den Umfang abwechselnde Ausbildung einer Mitnehmerspitze der An- und/oder Abtriebswelle bevorzugt über die gesamte vertikale Höhe als Element der ersten oder als Element der zweiten Stufe. So sind bei einer bevorzugten Ausgestaltung des Kupplungsbereiches der An- und/oder Abtriebswelle mit über den Umfang gleichmäßig verteilt angeordneten sechs Mitnehmerspitzen drei Mitnehmerspitzen als Elemente der ersten Stufe und drei Mitnehmerspitzen als Elemente der zweiten Stufe ausgeformt, wobei in Umfangsrichtung betrachtet zwischen zwei Elementen der ersten Stufe ein Element der zweiten Stufe angeordnet ist. Alternativ können über den Umfang betrachtet bei einer Mehrzahl von Mitnehmerspitzen nur zwei solcher Mitnehmerspitzen vollständig als Element der ersten Stufe ausgebildet sein, weiter auch nur drei Mitnehmerspitzen, wobei die Anzahl der Mitnehmerspitzen aus Elementen der ersten Stufe auch geringer oder größer gewählt sein kann als die Anzahl der in Umfangsrichtung betrachteten Mitnehmerspitzen aus Elementen der zweiten, steiferen Stufe.

Bevorzugt sind von der Unter- und Oberseite der An- und/oder Abtriebswelle ausgehend gegeneinander gerichtete Elemente der ersten Stufe in dem Element zur Bildung der zweiten Stufe angeordnet, so weiter bevorzugt steckangeordnet. Insbesondere die Elemente der ersten Stufe können hierbei als Einzelelemente vorliegen, darüber hinaus, wie weiter bevorzugt in Form eines korbartigen Gesamtelements, wobei die Elemente der ersten und zweiten Stufe bevorzugt zufolge kammartigen Ineinanderschiebens in Achserstreckungsrichtung der Welle miteinander steckverbunden werden. Dies erweist sich insbesondere als montagegünstig.

Zufolge der vorbeschriebenen Ausgestaltung ergibt sich in bevorzugter Ausführungsform eine insgesamt zumindest zweistufige Dämpfung, wobei die erste Stufe unter Einbeziehung des Elements bzw. der Elemente realisiert ist und die zweite Stufe unter Überwindung desselben allein durch Kupplungseingriff der An- und Abtriebswellen erreicht ist. In bevorzugter Ausgestaltung wirkt hierbei die erste Stufe reibschlüssig bis zu einem Drehmoment 35 Ncm bis 70 Ncm, welches Drehmoment im Leerlaufbetrieb des Rührwerks und darüber hinaus bei geringer Last vorliegt. Die zweite, das dämpfende Element überbrückende Stufe, wirkt bei einer, den Maximalwert der ersten Stufe übersteigenden Last, beispielsweise bei einer Last, die größer ist als 70 Ncm.

Das Dämpfungsteil bzw. das Element der ersten Stufe besteht weiter in bevorzugter Ausgestaltung aus einem Elastomerwerkstoff, beispielsweise aus einem thermoplastischen Elastomer (TPE), Silikon oder Nitrilkautschuk (NBR), weiter bevorzugt aus Polyurethan (PU).

Die jeweils angegebenen zahlenmäßigen Bandbreiten schließen auch - soweit solche nicht ohnehin exemplarisch angegeben sind - sämtliche Zwischenwerte ein, und zwar insbesondere in Ein-Zehntel-Schritten von der unten und/oder oberen Grenze auf die jeweils andere Grenze hin eingeschränkt. "und" steht hierbei dafür, dass beide Grenzen um jeweils ein oder mehrere Zehntel auf die Grenze hin verschoben, das heißt eingegrenzt werden.

Nachstehend ist die Erfindung anhand der beigefügten Zeichnung, welche lediglich Ausführungsbeispiele darstellt, näher erläutert. Es zeigt:
- Fig. 1: in Ansicht eine erfindungsgemäße Küchenmaschine mit einem Rührtopf sowie einem in dem Rührtopf angeordneten, antreibbaren Rührwerk;
- Fig. 2: den Bereich II in Fig. 1 in geschnittener Darstellung, den Kupplungsbereich des Rührwerks betreffend;
- Fig. 3: den Schnitt gemäß der Linie III - III in Fig. 2 durch den Kupplungsbereich einer maschinenseitigen Antriebswelle und einer rührtopfseitigen Abtriebswelle, den lastfreien Zustand betreffend;
- Fig. 4: die Herausvergrößerung des Bereiches IV in Fig. 3;
- Fig. 5: eine der Fig. 4 entsprechende Darstellung, jedoch den lastarmen Zustand betreffend;
- Fig. 6: eine weitere der Fig. 4 entsprechende Darstellung, den Hochlastbetrieb betreffend;
- Fig. 7: die rührtopfseitige Abtriebswelle in einer perspektivischen Darstellung;
- Fig. 8: eine der Fig. 6 entsprechende Darstellung, jedoch eine zweite Ausführungsform betreffend;
- Fig. 9: in perspektivischer Einzeldarstellung eine mit Elementen der ersten und zweiten Stufe versehene Abtriebswelle in einer weiteren Ausführungsform;
- Fig. 10: eine Ausschnittdarstellung gemäß Fig. 4, die Ausführungsform gemäß Fig. 9 betreffend;
- Fig. 11: eine der Fig. 3 entsprechende Schnittdarstellung, betreffend eine weitere Ausführungsform;
- Fig. 12: die perspektivische Darstellung der mit ersten und zweiten Elementen versehenen Abtriebswelle gemäß Fig. 9;
- Fig. 13: die Herausvergrößerung des Bereiches XIII in Fig. 11;
- Fig. 14: eine der Fig. 13 entsprechende Darstellung, jedoch den lastarmen Zustand betreffend;
- Fig. 15: eine weitere der Fig. 13 entsprechende Darstellung, den Hochlastbetrieb betreffend;
- Fig. 16: eine der Fig. 3 entsprechende Schnittdarstellung, die Ausbildung einer mit Elementen der ersten und zweiten Stufe ausgebildeten Abtriebswelle in einer weiteren Ausführungsform;
- Fig. 17: die perspektivische Einzeldarstellung der mit Elementen der ersten und zweiten Stufe versehenen Abtriebswelle gemäß Fig. 16;
- Fig. 18: die Herausvergrößerung des Bereiches XVIII in Fig. 16;
- Fig. 19: eine der Fig. 18 entsprechende Darstellung, den lastarmen Zustand betreffend und
- Fig. 20: eine weitere der Fig. 18 entsprechende Darstellung, jedoch den Hochlastbetrieb betreffend.

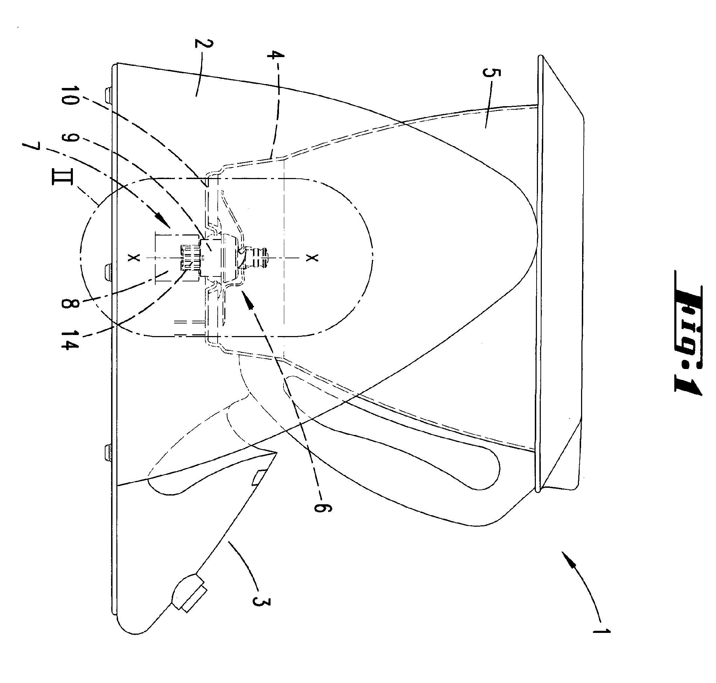

Dargestellt und beschrieben ist zunächst mit Bezug zu Figur 1 eine Küchenmaschine 1 mit einem Gehäuse 2, welch letzteres ein Bedienfeld 3 aufweist. Dieses Bedienfeld 3 trägt insbesondere einen Drehzahlsteller, weiter gegebenenfalls einen Temperaturwähler sowie ein Display.

Des Weiteren weist das Gehäuse 2 eine Rührtopfaufnahme 4 für einen abnehmbaren und gegebenenfalls beheizbaren Rührtopf 5 auf. Letzterer ist mit einem Rührwerk 6 in Form eines Messerwerkes versehen, welches über eine Kupplung 7 bei in der Rührtopfaufnahme 4 aufgenommenem Rührtopf 5 mit einem, über den Drehzahlsteller regelbaren, in dem Gehäuse 2 der Küchenmaschine aufgenommenen Elektromotor in Verbindung steht.

Der Topfboden 10 des Rührtopfes 5 ist flach und im Wesentlichen eben ausgebildet, wobei weiter in diesem Topfboden 10 ein Widerstands-Heizelement beispielsweise in Form einer Dickschichtheizung integriert sein kann.

Die senkrecht zum Topfboden 10 ausgerichtete Rührwerkachse x durchsetzt den Topfboden 10 mittig. Eine Festlegung des Rührwerkes 6 an dem Topfboden 10 erfolgt mittels Verspannung.

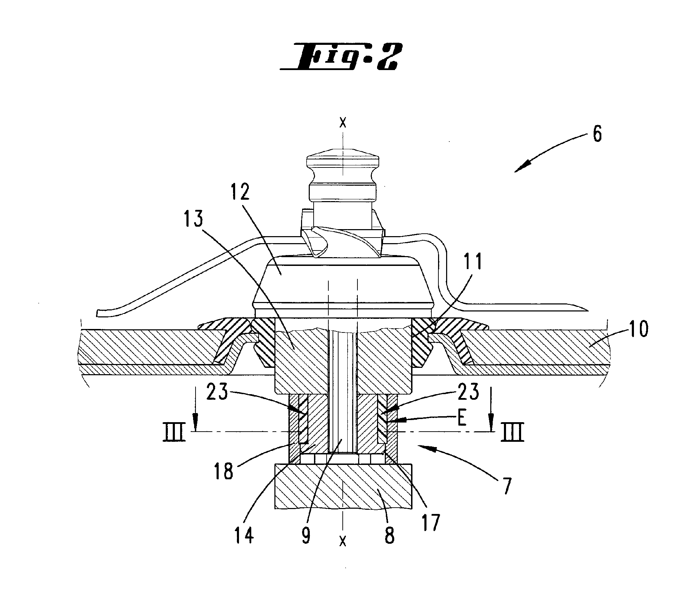

Wie insbesondere aus der Darstellung in Figur 2 zu erkennen, weist das Rührwerk 6 eine, den Topfboden 10 durchsetzende Abtriebswelle 9 auf. Diese ist drehfest mit den Werkzeugen, hier Messern, des Rührwerkes 6 verbunden.

Die Abtriebswelle 9 ist zunächst im Bereich eines, den Topfboden 10 im Bereich einer entsprechend kreisrunden Öffnung 11 durchsetzenden Festlegungsgehäuses 12 geführt. Mittels Letzterem wird die Klemmfestlegung des gesamten Rührwerkes 6 an dem Topfboden 10 erreicht. Der nach unten, das heißt zum Rührwerk 6 abgewandten Seite des Topfbodens 10 hinausragende Abschnitt des Festlegungsgehäuses 12 formt einen im Querschnitt kreisförmigen Ringkörper 13 aus.

Der weiter über den Ringkörper 13 hinausragende Abschnitt der Abtriebswelle 9 ist drehfest mit einem Kupplungsmitnehmer 14 versehen. Dieser kann auch einstückig mit der Abtriebswelle 9 ausgeformt sein.

Dieser Kupplungsmitnehmer 14 ist im Querschnitt, das heißt in einer quer zur Wellenachse bzw. Rührwerksachse x betrachteten Ebene bezüglich der Außenkontur im Wesentlichen sternförmig gestaltet, so weiter über den Umfang betrachtet bevorzugt sechs gleichmäßig zueinander beabstandet angeordnete, verrundete Mitnehmerspitzen 15 aufweisend. Zwischen diesen Mitnehmerspitzen 15 nimmt die Außenkontur des Kupplungsmitnehmers 14 eine konkave Kontur auf, so dass sich zwischen den Mitnehmerspitzen 15 Täler 16 bilden. Es sind so radiale Maximal- und Minimalabstandsbereiche geschaffen, die bezüglich einer gedachten Kreislinie L über den Umfang gleichmäßig wechselnd verlaufen. In Umfangsrichtung betrachtet gehen die verrundeten Mitnehmerspitzen 15 tangential anschließend unmittelbar und somit stufenlos über in die gleichfalls verrundeten Täler 16.

In dem dargestellten Ausführungsbeispiel ergibt sich ein Verhältnis des Mitnehmerdurchmessers im Bereich der Mitnehmerspitzen 15 zu den Tälern 16 von etwa 1,2 : 1 bis 1,5 : 1.

Die axiale Länge des Kupplungsmitnehmers 14 entspricht etwa dem 0,7- bis 1-Fachen des maximalen Durchmessers desselben.

In weiterer Ausgestaltung liegt das Höhen-/Breitenverhältnis des Kupplungsmitnehmers 14 zwischen 0,5 und 2, bevorzugt zwischen 1 und 1,5.

Das freie Ende des Kupplungsmitnehmers 14 ist mit einer umlaufenden Fase 17 versehen, zur Ausformung einer Einführhilfe.

Weiter ist in der Küchenmaschine 1 ein über einen Elektromotor drehantreibbares Kupplungsteil 18 vorgesehen. Dieses ist Teil der Antriebswelle 8.

Das Kupplungsteil 18 ist topfartig gestaltet, zur axialen Steckzuordbarkeit des rührwerkseitigen Kupplungsmitnehmers 14. Die Aufnahmeinnenkontur des Kupplungsteiles 18 ist annähernd angepasst an die Außenkontur des Kupplungsmitnehmers 14, das heißt zumindest partiell demgegenüber radial erweitert parallel verlaufend. Hieraus resultieren über den Umfang gleichmäßig verteilt angeordnete, zur Aufnahme der Mitnehmerspitzen 15 des Kupplungsmitnehmers 14 ausgebildete Spitzenaufnahmebereiche 19, die angepasst an die Kontur der Mitnehmerspitzen 15 in ihren Tälern verrundet sind. Entsprechend der Anzahl von Kupplungsmitnehmern 14 sind in dem dargestellten Ausführungsbeispiel gleichfalls sechs Spitzenaufnahmebereiche 19 ausgeformt. Zwischen zwei in Umfangsrichtung benachbarten Spitzenaufnahmebereichen 19 wölbt sich die Innenwandung des Kupplungsteiles 24 vor. Diese Vorwölbungen 20 sind in Kupplungs-Steckzuordnung den Tälern 16 des Kupplungsmitnehmers 14 zugeordnet, jedoch die Kontur der Täler 16 nicht aufnehmend. Vielmehr sind die Vorwölbungen 20 in einem Querschnitt verrundet spitzenartig gestaltet, wobei ein Übergangsbereich zwischen Vorwölbung 20 und anschließendem Spitzenaufnahmebereich 19 durch einen sich im Querschnitt geradlinig erstreckenden Tangentialabschnitt 21 gebildet ist.

Entsprechend verläuft auch die Kontur des Kupplungsteiles 18 mit Bezug auf eine mittig zwischen den Vorwölbungen 20 und den Spitzenaufnahmebereichen 19 verlaufenden Kreislinie L' über den Umfang gleichmäßig wechselnd verlaufend unter Ausbildung von Minimal- und Maximalabstandsbereichen.

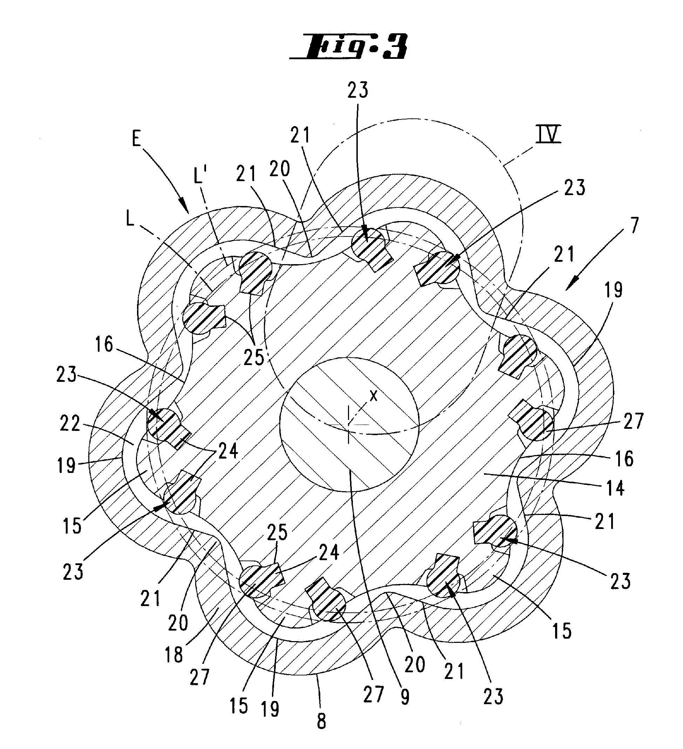

Die Durchmessermaße des Kupplungsteiles 18 im Bereich der Spitzenaufnahmebereiche 19 bzw. im Bereich der Vorwölbungen 20 sind so gewählt, dass in der Kupplungs-Steckzuordnung gemäß Figur 3, das heißt bei eingesetztem Kupplungsmitnehmer 14 in das Kupplungsteil 18 im Idealfall, weiter insbesondere im nicht belasteten Zustand, sich ein umlaufender Spalt 22 zwischen Kupplungsmitnehmer 14 und der Innenwandung des Kupplungsteiles 18 einstellt. Dieser Spalt 22 ist über den Umfang betrachtet unterschiedlich bemessen. So stellt sich in dem in Figur 3 dargestellten Idealfall im Bereich einer in den Spitzenaufnahmebereich 19 eingreifenden Mitnehmerspitze 15 ein gleichbleibendes Spaltmaß ein, welcher Spalt 22 weiter in Umfangsrichtung betrachtet im Bereich des Tangentialabschnittes 21 in Richtung auf die nachgeordnete Vorwölbung 20 keilartig zuläuft, womit sich unmittelbar im Bereich zwischen Vorwölbung 20 und kupplungsmitnehmerseitigem Tal 16 ein Minimalspalt einstellt, dessen radiales Spaltmaß in dem dargestellten Ausführungsbeispiel im Idealfall gemäß Figur 3 etwa dem 0,5-Fachen des Spaltmaßes im Spitzenaufnahmebereich 19 entspricht. Im allgemeinen liegt das Spaltmaß im Zehntel- bis Ein-Millimeter-Bereich.

Beidseitig einer eine jede Mitnehmerspitze 15 mittig durchlaufenden Radialen R trägt der Kupplungsmitnehmer 14 Dämpfungsteile in Form von Elementen 23. Letztere bestehen aus einem gummiartigen oder thermoplastischen Material, sind weiter entsprechend weicher eingestellt als der Kupplungsmitnehmer 14, weiter insbesondere weicher eingestellt als die Mitnehmerspitzen 15 sowie die Bereiche der Täler 16. Der Kupplungsmitnehmer 14 ist beispielsweise aus einem Metallwerkstoff oder Hartkunststoff gefertigt.

Die beidseitig einer jeden Mitnehmerspitze 15 angeordneten Elemente 23 sind streifenförmig gestaltet, hierbei parallel zur Rührwerkachse x bzw. zur Wellenachse und zumindest annähernd über die gesamte Höhe des Kupplungsmitnehmers 14 verlaufend.

Jedes Element 23 weist zunächst einen Halterungsabschnitt 24 auf. Dieser erstreckt sich über die gesamte axiale Länge eines jeden Elementes 23 und dient in dem dargestellten Ausführungsbeispiel zur schwalbenschwanzartigen Steckfestlegung des Elementes 23 in einer parallel zur Achse x verlaufenden Nut 25 des Kupplungsmitnehmers 14. Neben diesem Formschluss wird bevorzugt oder alternativ eine Klebeverbindung zwischen Halterungsabschnitt 24 und Nut 25 vorgesehen. Eine senkrecht die Klebefläche 26 im Nutgrund durchsetzende und das Element 23 in Umfangsrichtung halbierende Linie schließt zu der vorbezeichneten Radialen R einen Winkel α von bevorzugt 45° ein.

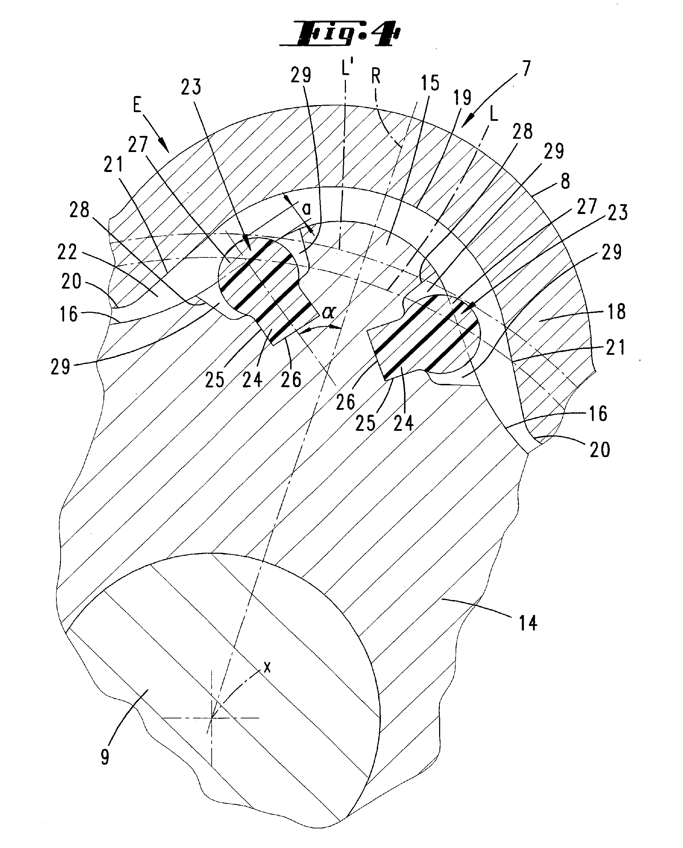

Der nach außen über den Halterungsabschnitt 24 hinausragende Abschnitt des Elementes 23 ragt weiter über die Kontur des Kupplungsmitnehmers 14 hinaus, ist entsprechend im nicht beanspruchten Zustand gemäß den Figuren 3 und 4 mit einem Überstand a zu den in Umfangsrichtung betrachtet umgebenden Bereichen des Kupplungsmitnehmers 14, das heißt weiter zu der zugeordneten Mitnehmerspitze 15 und dem zugeordneten Tal 16 von bevorzugt 0,4 mm bis 0,5 mm ausgebildet. Dieser zufolge der Materialwahl entsprechende komprimierbare Anlageabschnitt 27 des Elementes 23 ist mit Bezug auf einen Querschnitt gemäß den Darstellungen in den Figuren 3 und 4 zumindest annähernd kreisscheibenförmig gestaltet, materialeinheitlich und einstückig übergehend in den Halterungsabschnitt 24. Der dem Halterungsabschnitt 24 gegenüberliegende Kreisscheibenbereich des Anlageabschnittes 27 steht im Idealfall, insbesondere in einer nicht belasteten Kupplungsstellung mit dem Überstandsmaß a über die Kontur des Kupplungsmitnehmers 14 hinaus und ragt in den Spalt 22 ein.

Der Anlageabschnitt 27 liegt in einem, in dem Kupplungsmitnehmer 14 geschaffenen Ausdehnungsfreiraum 28 ein. Dieser umgibt entsprechend das Element 23 insbesondere im Bereich des Anlageabschnittes 27, wobei der Ausdehnungsfreiraum 28 größenmäßig angepasst ist an das Volumen des elementseitigen Anlageabschnittes 27, insbesondere zur Aufnahme des radial überstehenden Bereichs.

Die Elemente 23 stellen eine erste Stufe einer Dämpfungseinrichtung E dar, die den niedrigen bis mittleren Lastbereich abdecken. Die zweite Stufe der Dämpfungseinrichtung E ist gebildet durch den Kupplungsmitnehmer 14 selbst, wobei die Elemente 23 der ersten Stufe beidseitig entlang der Eingriffsflanken (Mitnehmerspitzen 15) des Kupplungsmitnehmers 14 vorgesehen sind.

Die nachstehend näher beschriebenen Dämpfungsverhalten beziehen sich in den dargestellten Ausführungsformen auf eine Drehrichtung b, sind jedoch in gleicher Weise auch für eine entgegengesetzte Drehrichtung gültig.

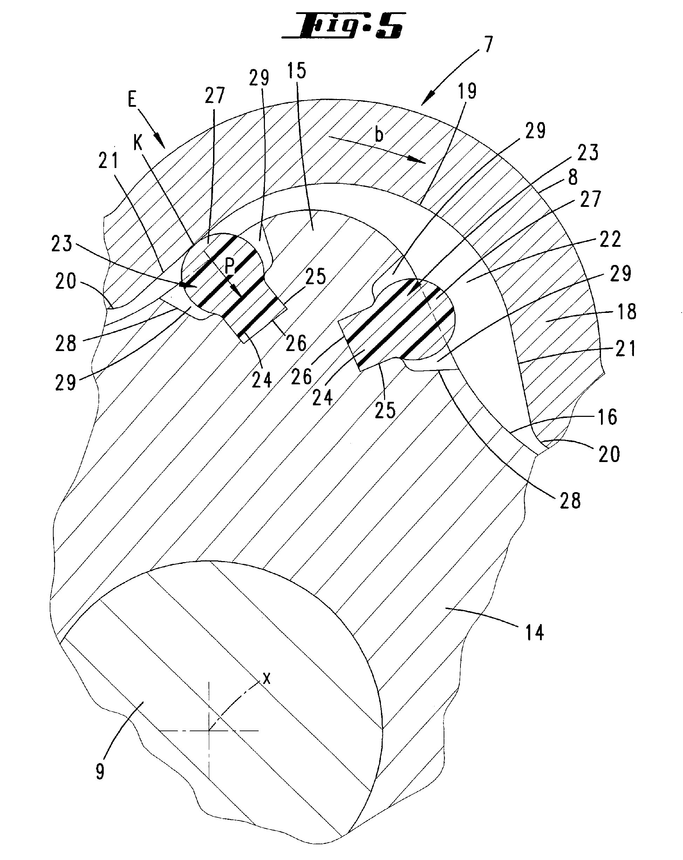

Die in den Figuren 3 und 4 dargestellte Ausrichtung der Kupplungsteile zueinander entspricht dem Ruhezustand, das heißt bei nicht drehangetriebener Kupplung 7. Bei entsprechendem Drehantrieb der Antriebswelle 8 ergibt sich eine Kupplungsstellung gemäß Figur 5. In diesem lastarmen Zustand ergibt sich eine punktuelle Anlage (Punkte K) der Elemente 23 im Bereich der zugewandten Tangentialabschnitte 21. Über diese punktuelle Anlage ist eine kraftschlüssige Übertragung ermöglicht, dies weiter bis zu einem Drehmoment-Grenzwert ohne relative Drehverlagerung von Kupplungsmitnehmer 14 und Kupplungsteil 18 zueinander.

Die hierbei auf das Element 23 einwirkende Druckkraft P ist senkrecht ausgerichtet zu der Abstütz- und/ oder Klebefläche 26 des Elements 23, so dass die auf das Element 23 einwirkende Druckkraft P auf die Halterung des Elementes 23 zufolge zentraler Belastung der Klebefläche 26 bzw. auf die Steckhalterung unterstützend einwirkt. Scherkräfte oder dergleichen treten entsprechend hierbei nicht auf.

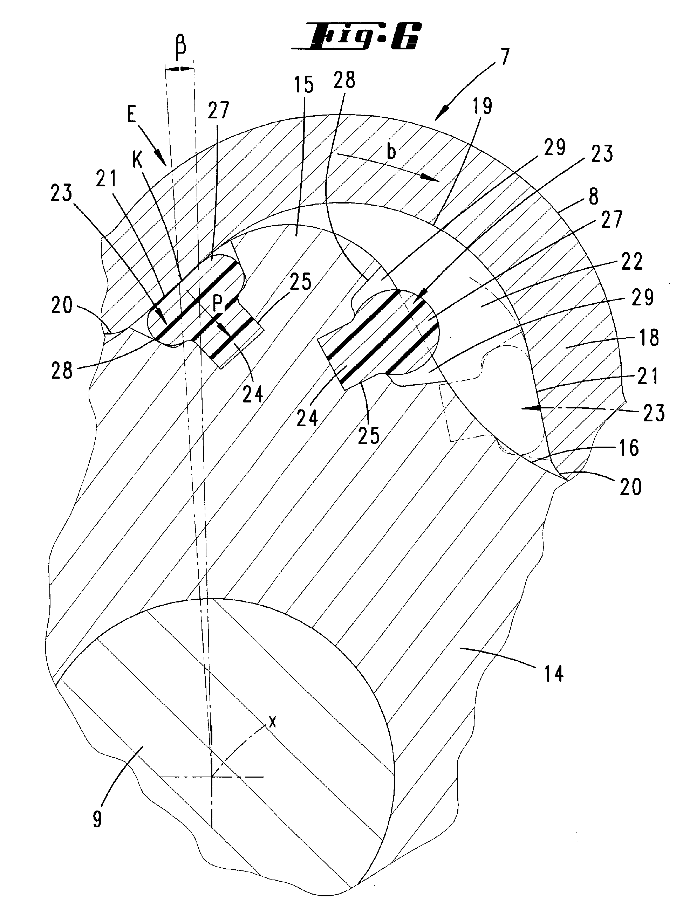

Erst nach Überschreiten eines Last-Grenzwertes und Erreichen einer auf die Kupplung 7 wirkenden Hochlast erfolgt eine Komprimierung des Anlageabschnittes 27 eines jeden in Drehrichtung b wirkenden Elementes 23, wobei der komprimierte Anlageabschnitt 27 in den Ausdehnungsfreiraum 28 ausweichen kann. Im Zuge dieser Komprimierung, weiter im Zuge eines Übergangs von einem wie in Figur 5 dargestellten lastarmen Zustand in einen wie in Figur 6 dargestellten Hochlastbetrieb wirkt die Druckkraft P stets in Richtung auf die Klebefläche 26, wobei weiter sich über den Einfederungsbereich die zugeordneten Flanken von Antriebswelle 8 und Abtriebswelle 9 mit Bezug auf die Umfangsrichtung bzw. Drehrichtung praktisch nicht relativ zueinander verschieben. Zwischen dem Lastfall gemäß Figur 5 und dem Lastfall gemäß Figur 6 ist lediglich eine insbesondere hinsichtlich abrasiv auf die Oberfläche des Anlageabschnittes 27 einwirkender Kräfte vernachlässigbarer Schwenkwinkel des Kupplungsmitnehmers 14 relativ zu dem Kupplungsteil 18 von etwa 2° zu verzeichnen (vergleiche Figur 6 Winkel β), welcher Winkel etwa einem Zehntel des gesamten umfangsmäßigen freien Bewegungswinkels des Kupplungsmitnehmers 14 in dem Kupplungsteil 18 entspricht.

Gemäß der Darstellung in Figur 6 ist die zweite Stufe der Dämpfungseinrichtung E erreicht bei hohen Lasten, bei welchen unter Komprimierung der Elemente 23 der das Element 23 bzw. den Ausdehnungsfreiraum 28 umgebende Bereich des Kupplungsmitnehmers 14 in unmittelbare Anlage tritt zu dem zugeordneten Tangentialabschnitt 21 des Kupplungsteiles 18. Durch entsprechende Materialwahl der Kupplungspartner, weiter insbesondere des Kupplungsmitnehmers 14 ist die zweite Stufe entsprechend steifer bzw. härter ausgelegt als die erste Dämpfungsstufe, die durch die komprimierfähigen Elemente 23 gebildet sind. Der Kupplungsmitnehmer 14 und das Kupplungsteil 18 sind aus einem, die Kräfte im Hochlastbereich übertragenden Werkstoff gefertigt, beispielsweise aus einem entsprechend ausgelegten Hartkunststoff oder aus einem Metallwerkstoff.

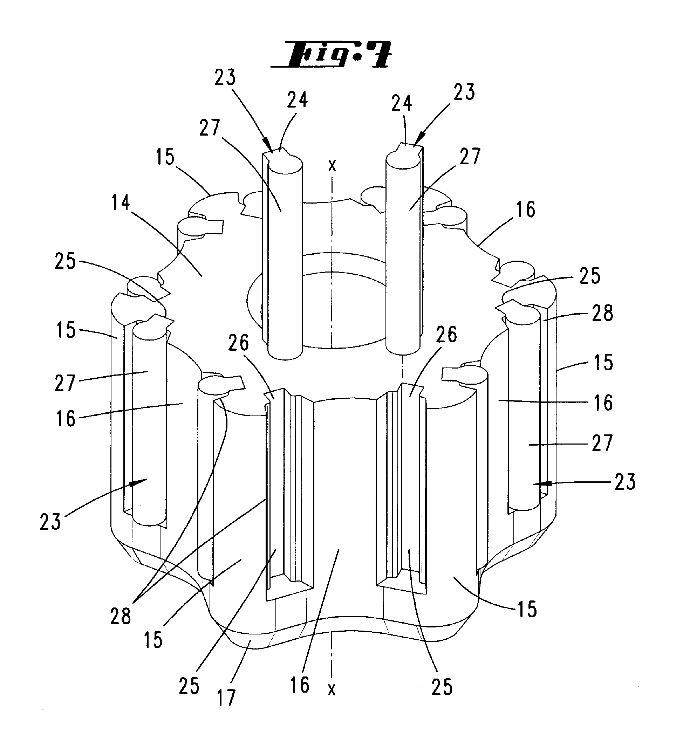

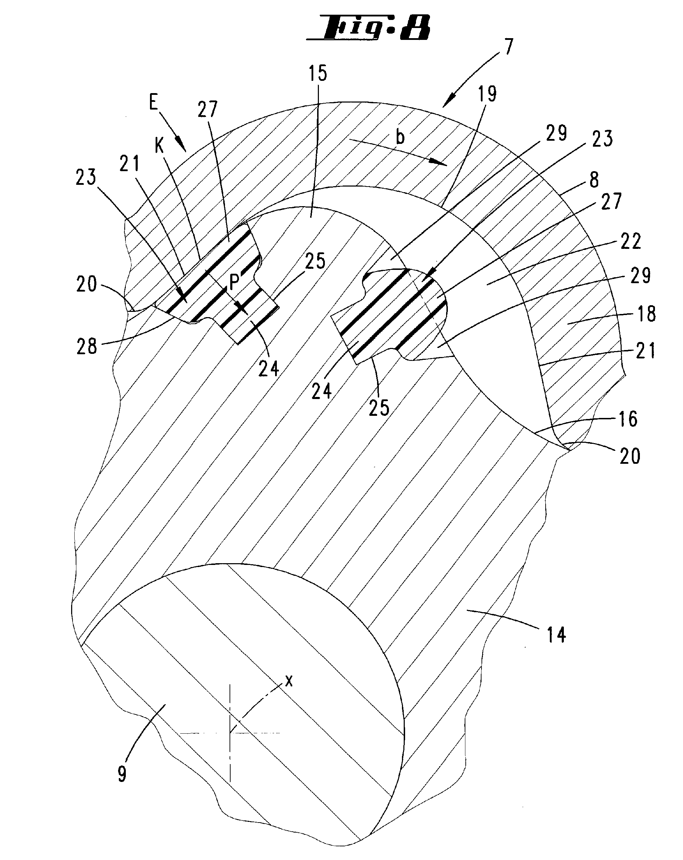

Ist das Element 23, insbesondere dessen Anlageabschnitt 27 der ersten Ausführungsform gemäß den Figuren 1 bis 7 im Querschnitt rund gestaltet, zugeordnet einem weiter im Querschnitt betrachteten eckigen Ausdehnungsfreiraum 28, so ist in einer Ausführungsform gemäß der Figur 8 insbesondere bei einer Zweikomponentenausführung ein im Querschnitt pilzförmiger Anlageabschnitt 27 des Elementes 23 gegeben, welcher Anlageabschnitt 27 in einem trapezförmigen Ausdehnungsfreiraum 28 einliegt, wobei die sich benachbart zu dem Anlageabschnitt 27 einstellenden Zwickel 29 zusammengefasst mindestens die Größe des über die Kontur des Kupplungsmitnehmers 14 hinausragenden Bereiches des Anlageabschnittes 27 aufweisen.

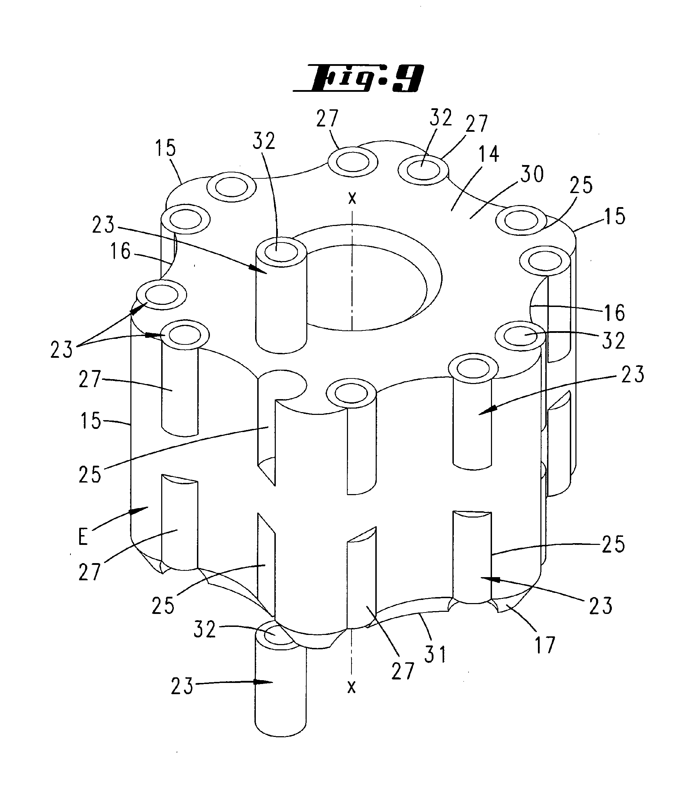

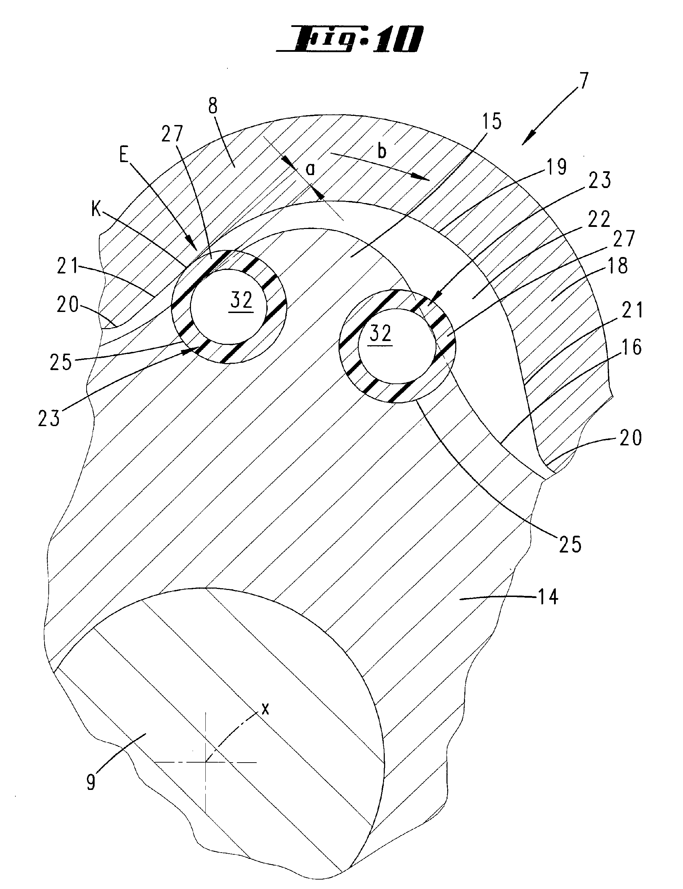

Die Figuren 9 und 10 zeigen eine weitere Ausführungsform, im Wesentlichen basierend auf den zuvor beschriebenen Ausführungsformen. Entsprechend liegen Elemente 23 der ersten Stufe insgesamt in Art streifenförmig dem Element der zweiten Stufe, hier dem Kupplungsmitnehmer 14 der Abtriebswelle 9 steckzuordbar ausgebildeten Einzelelementen vor. Auch diese erstrecken sich im Wesentlichen in vertikaler Richtung, parallel zur Achse x, jeweils ausgehend von einer in Achserstreckung betrachteten Oberseite 30 und Unterseite 31 des Kupplungsmitnehmers 14, wobei weiter diese Elemente 23 hinsichtlich ihrer aufeinander zu gerichteten Enden zueinander beabstandet sind, hierbei eine gemeinsame zentrale, parallel zur Achse x verlaufende Achse aufnehmend.

Die Elemente 23 sind weiter entsprechend den zuvor beschriebenen Ausführungsbeispielen mit Bezug auf einen Querschnitt gemäß Figur 10 im Übergangsbereich zwischen einer Mitnehmerspitze und einem anschließenden Tal 16 angeordnet.

Die Elemente 23 sind weiter mit Bezug auf einen Querschnitt ringförmig gestaltet, so dass sich entsprechend insgesamt schlauchartige Elemente 23 mit einem in Zuordnungsstellung vertikal durchgehenden Hohlraum 32 einstellen. Der Durchmesser der im Querschnitt ringförmigen Elemente 23 ist weiter so gewählt, dass bei einer im Querschnitt betrachteten Fassung derselben über einen Umfang von etwa 270° sich ein Überstand a gemäß den zuvor beschriebenen Ausführungsbeispielen von etwa 0,4 bis 0,5 mm einstellt.

Zufolge der schlauch- bzw. ringförmigen Ausgestaltung der die erste Stufe bildenden Elemente 23 ist in der Hochlaststellung der Kupplung 7 eine Verdrängung des über die Randkontur der steifer ausgelegten ersten Stufe - hier des Kupplungsmitnehmers 14 - frei ausragenden Abschnitts des Elementes 23 durch Deformation desselben erreichbar. Der Hohlraum 32 bietet quasi einen Ausweichraum für das zu verdrängende Material.

Im Bereich der in Axialrichtung betrachteten Beabstandung der aufeinander zu gewandten Enden der Elemente 23 ist die zugeordnete Flanke zwischen der Mitnehmerspitze 15 und dem Tal 16 bevorzugt als harte, erste Stufe ausgebildet.

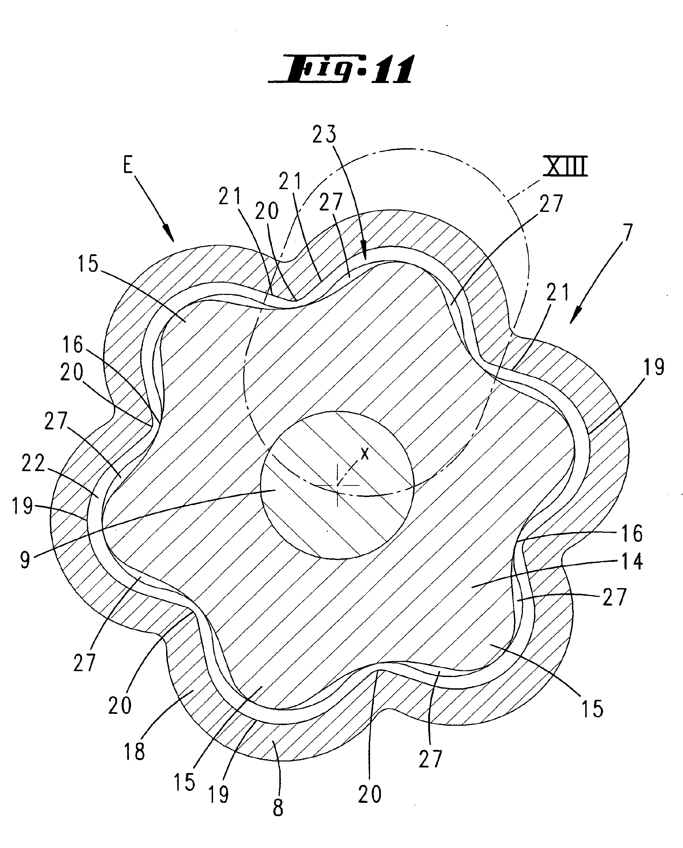

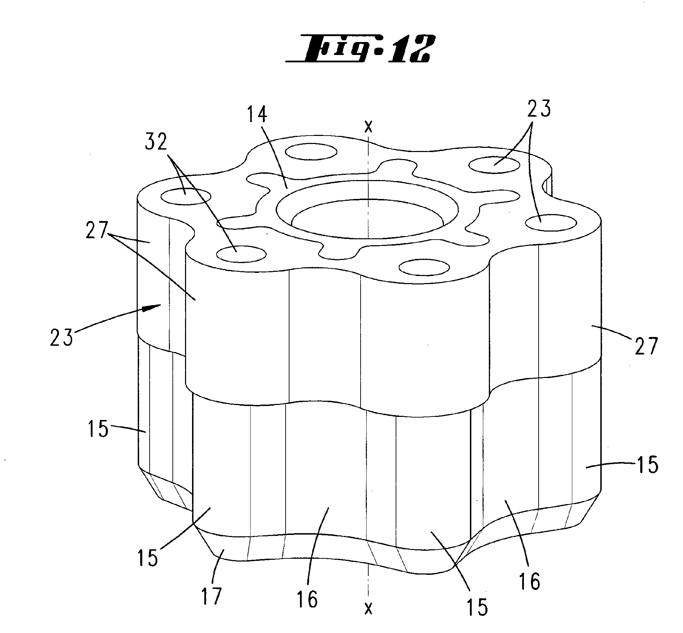

Die Figuren 11 bis 15 zeigen in weiterer Ausführungsform eine Abtriebswelle 9, bei welcher in Axialrichtung betrachtet ein Teilabschnitt über den gesamten Umfang als steifere, zweite Stufe ausgebildet ist, während sich axial hieran anschließend ein Element 23 zur Bildung der ersten Stufe vorgesehen ist. Das Element 23 umfasst in dem dargestellten Ausführungsbeispiel insgesamt ringartig einen harten Kern des Kupplungsmitnehmers 14.

Das insgesamt über den gesamten Umfang ausgebildete Element 23 ist in dem dargestellten Ausführungsbeispiel einer Oberseite 30 des Kupplungsmitnehmers 14 zugeordnet. Es kann jedoch auch der Unterseite 31 zugeordnet vorgesehen sein, darüber hinaus weiter auch sowohl zugeordnet der Oberseite als auch der Unterseite, wobei hierbei zwischen zwei derartigen Elementen 23 umlaufend ein hartes Element zur Bildung der zweiten Stufe vorgesehen ist. Auch die umgekehrte Anordnung ist diesbezüglich denkbar, entsprechend mit jeweils einer harten, zweiten Stufe zugeordnet dem Bereich der Oberseite und der Unterseite mit zwischen diesen harten Stufen angeordnetem Element 23 zur Bildung der ersten Stufe.

Der unmittelbar aus dem Material des Kupplungsmitnehmers 14 bevorzugt ausgebildete Bereich der zweiten Stufe ist entsprechend dem zuvor beschriebenen Ausführungsbeispiel über den Umfang betrachtet gleichmäßig mit Mitnehmerspitzen 15 und Tälern 16 versehen, wobei sowohl die Mitnehmerspitzen 15 wie auch die Täler 16 verrundet sind, dies unter bevorzugt tangentialem Übergang der Täler 16 in die Mitnehmerspitzen 15.

Das in Axialrichtung zugeordnete Element 23 übernimmt mit Bezug auf einen quer zur Achse x betrachteten Querschnitt die Außenkontur der zweiten Stufe, entsprechend ebenfalls Wellentäler und Wellenberge aufnehmend, wobei weiter bevorzugt mit Bezug auf eine senkrechte Projektion auf den Bereich der zweiten Stufe die Täler und Berge des Elementes 23 zumindest in den Spitzenbereichen in Überdeckung liegen zu den Mitnehmerspitzen 15 und Tälern 16 des Kupplungsmitnehmers 14, hingegen in den Übergangsbereichen von Mitnehmerspitzen 15 in die Täler 16 das Element 23 diesbezüglich in radialer Richtung um ein Überstandsmaß a von 0,4 bis 0,5 mm vergrößert ist, zur Ausformung von Anlagenabschnitten 27.

Zugeordnet einer jeden Mitnehmerspitze 15 ist das Element 23 zur Bildung der ersten Stufe mit einem vertikal, und so entsprechend parallel zur Achse x verlaufenden, durchgehenden Hohlraum 32 versehen.

Das Element 23 ist in einer Ausgestaltung mit dem Kupplungsmitnehmer 14, bei Ausgestaltung desselben beispielsweise aus einem Hartkunststoff, im Zwei-Komponenten-Spritzverfahren hergestellt und somit mit dem Kupplungsteil 18 verbunden. Alternativ ist diesbezüglich eine Steckverbindung vorgesehen, so weiter insbesondere eine in Achserstreckungsrichtung gerichtete Steckverbindung.

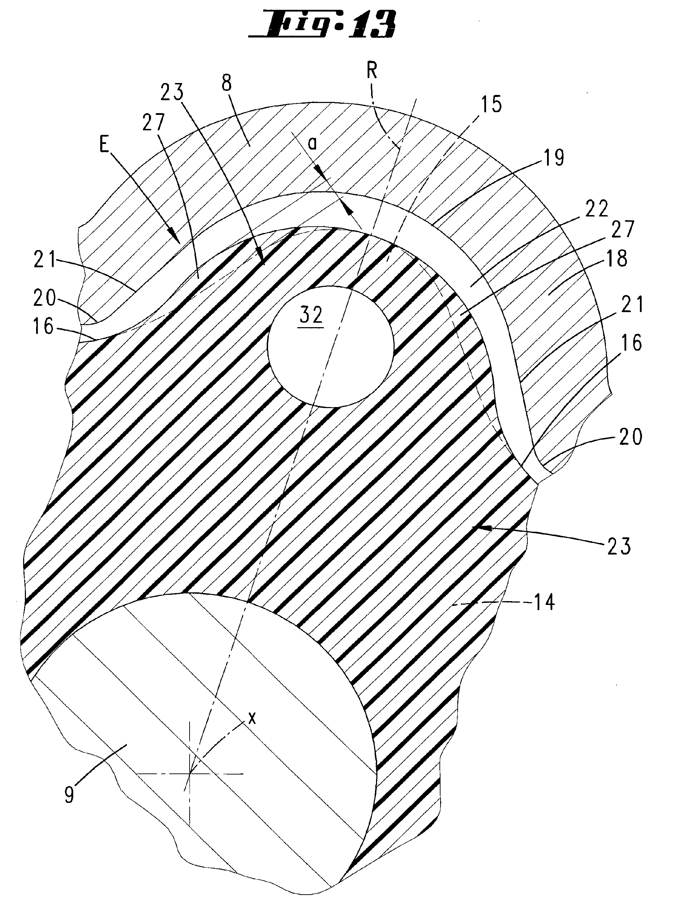

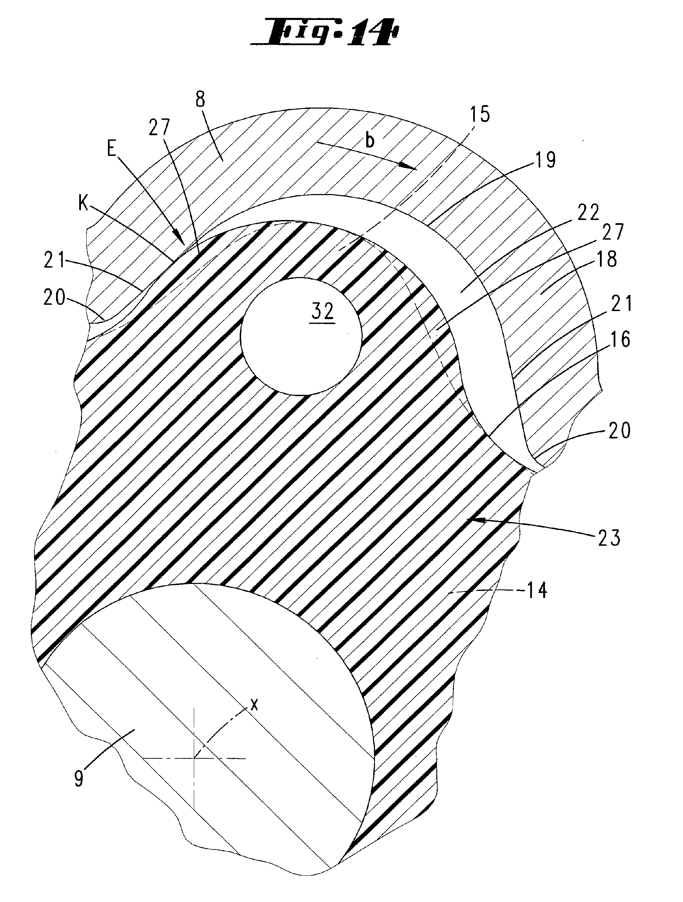

Wie weiter insbesondere aus den Darstellungen in den Figuren 13 bis 15 zu erkennen, ist die Wirkungsweise der Kupplung 7 gleich der der zuvor beschriebenen Ausführungsbeispiele. Bei Drehantrieb der Antriebswelle 8 ergibt sich eine Kupplungsstellung gemäß Figur 14, in welcher bei lastarmem Zustand sich eine punktuelle Anlage im Punkt K zwischen den Anlageabschnitten 27 des Elementes 23 und den Tangentialabschnitten 21 der Antriebswelle 8 ergibt. Über diese punktuelle Anlage ist eine kraftschlüssige Übertragung ermöglicht. Die hierbei sich zufolge Einwirkung der Druckkraft auf das Element 23 bzw. auf dessen Anlageabschnitte 27 einstellende Drucklinie verläuft mit radialem Abstand zur Rührwerkachse x, quasi den Kupplungsmitnehmer 14 bzw. die Abtriebswelle 9 sekantenartig durchsetzend.

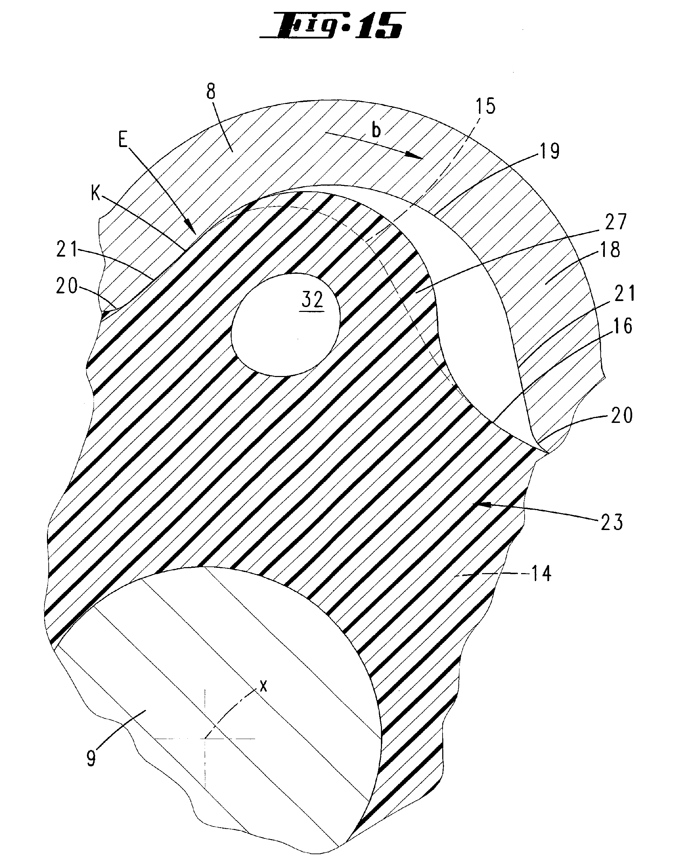

Nach Überschreiten eines Last-Grenzwertes und Erreichen einer auf die Kupplung 7 wirkenden Hochlast erfolgt eine Komprimierung des Anlageabschnittes 27, wobei zufolge der Ausformung des eines jeden Anlageabschnitt 27 zugeordneten Hohlraumes 32 ein Ausweichen des den Anlageabschnitt 27 jeweils formenden Elementbereiches nach innen ermöglicht ist. Gemäß der Darstellung in Figur 15 ist die zweite Stufe der Dämpfungseinrichtung E erreicht bei hohen Lasten, bei welchen die in axialer Richtung zu dem Element 23 ausgebildeten Bereiche des Kupplungsmitnehmers 14 in unmittelbare Anlage treten zu dem jeweils zugeordneten Tangentialabschnitt 21 des Kupplungsteiles 18.

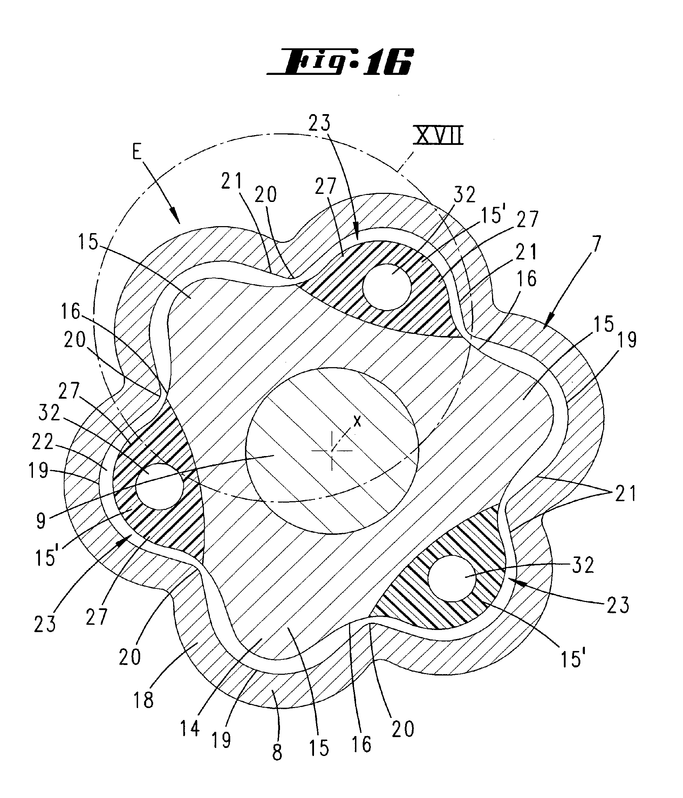

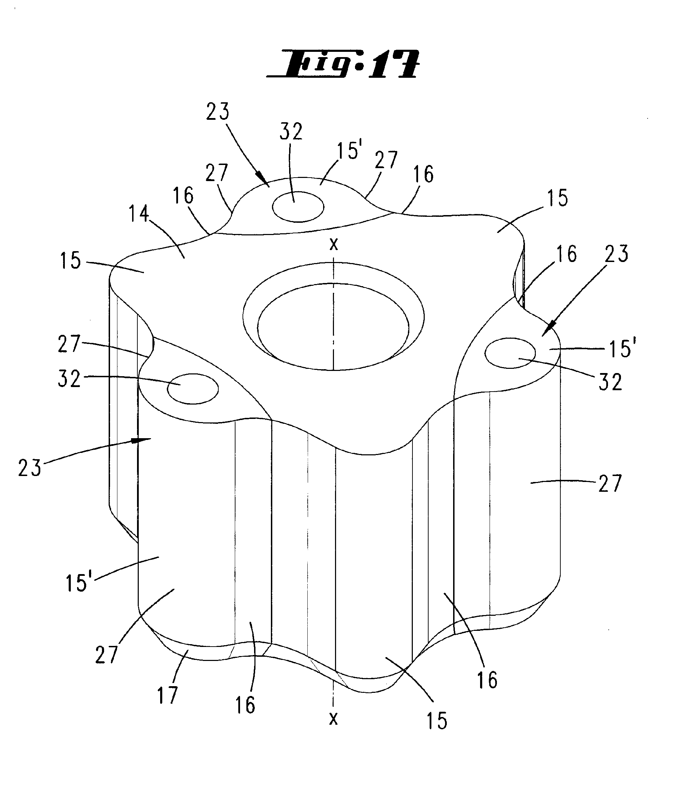

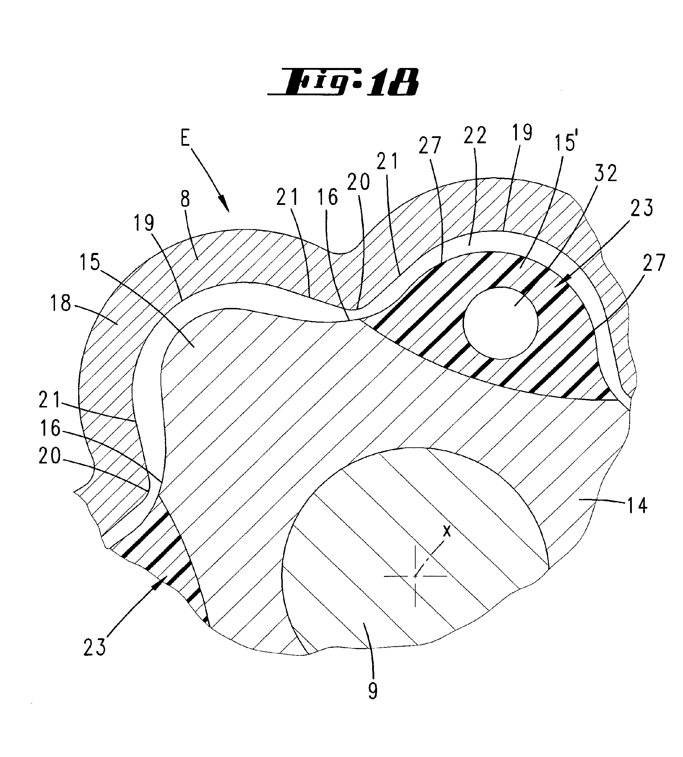

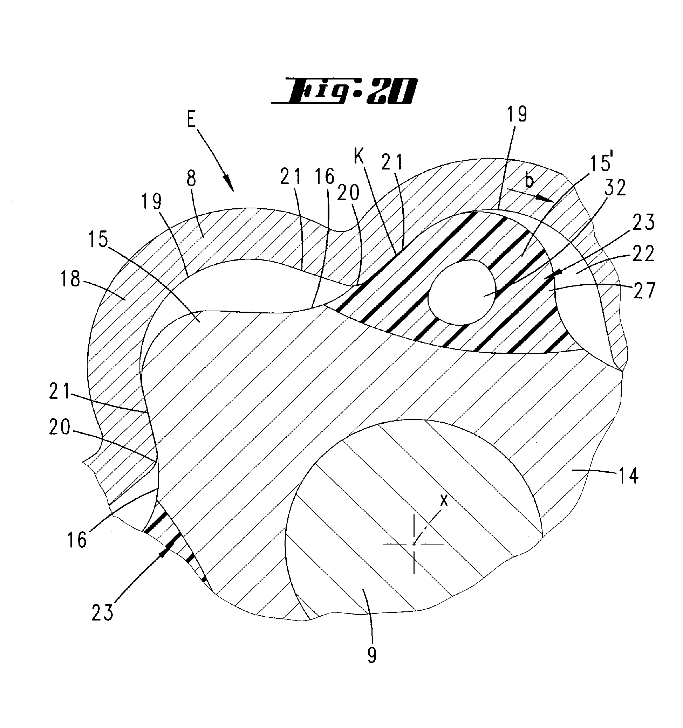

Eine weitere Ausführungsform zeigen die Darstellungen in den Figuren 16 bis 20. Hier erstreckt sich jeweils ein Element 23 bevorzugt über die gesamte axiale Höhe des das Element der zweiten Stufe bildenden Kupplungsteiles 18. Mit Bezug auf eine Ausgestaltung der Abtriebswelle 9 im Kupplungsbereich mit über den Umfang gleichmäßig verteilt angeordneten sechs Mitnehmerspitzen 15 ist in dieser Ausführungsform in Umfangsrichtung betrachtet nur jede zweite Mitnehmerspitze 15 die zweite, harte Stufe bildend aus dem Kupplungsmitnehmer 14 geformt. In Umfangsrichtung betrachtet zwischen zwei solchen Mitnehmerspitzen 15 ist jeweils ein Element 23 zur Bildung der ersten Stufe angeordnet, welches Element 23 bei bevorzugter Ausgestaltung des Kupplungsmitnehmers 14 aus einem Hartwerkstoff wie beispielsweise Hartkunststoff zusammen mit diesem im Zwei-Komponenten-Spritzverfahren hergestellt ist oder alternativ an den Kupplungsmitnehmer 14 angespritzt ist. Weiter alternativ ist diesbezüglich eine Steckverbindung zwischen den Elementen 23 und dem Kupplungsmitnehmer 14 vorgesehen.

Jedes Element 23 übernimmt im Wesentlichen die durch die Mitnehmerspitzen 15 des Kupplungsmitnehmers 14 vorgegebene Außenkontur, so dass sich entsprechend im radial äußeren Bereich der Elemente 23 gegenüber den Mitnehmerspitzen 15 des Kupplungsmitnehmers 14 weich eingestellte Mitnehmerspitzen 15' einstellen. Den Übergang zwischen einer Mitnehmerspitze 15 des Kupplungsmitnehmers 14 und der Mitnehmerspitze 15' eines Elementes 23 bildet ein Tal 16 gemäß den zuvor beschriebenen Ausführungsbeispielen, welches Tal 16 teilweise gebildet ist aus dem die zweite Stufe bildenden Kupplungsmitnehmer 14 und dem die erste Stufe bildenden Element 23.

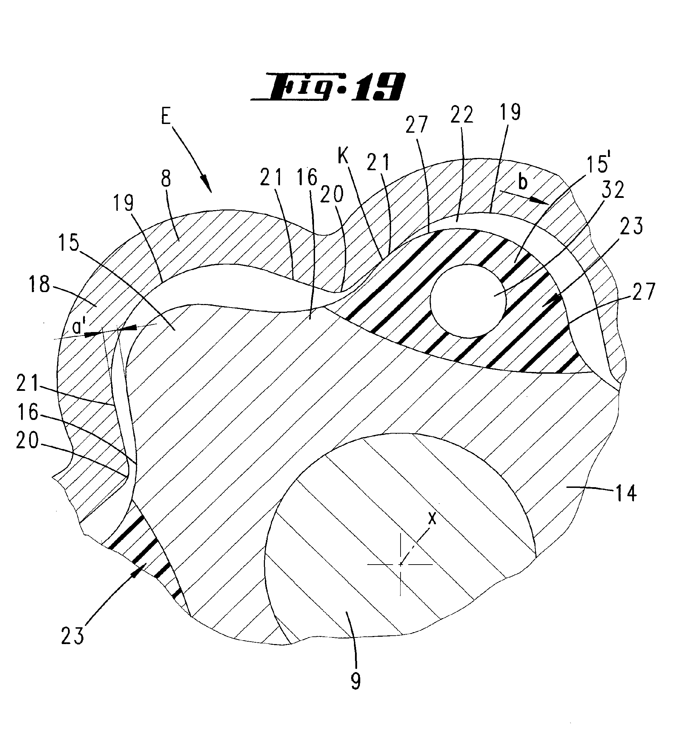

Verläuft die Randkontur der elementseitigen Mitnehmerspitze 15' konturgleich mit gleichem radialen Abstand zur Achse x wie die Mitnehmerspitze 15 des Kupplungsmitnehmers 14, so sind die sich beidseitig hieran anschließenden zum Tal 16 hin abfallenden Abschnitte der Elemente 23 gegenüber den vergleichbaren Bereichen des Kupplungsmitnehmers 14 zumindest annähernd in radialer Richtung erweitert, zur Ausformung von Anlageabschnitten 27, deren radiales Vergrößerungsmaß so gewählt ist, dass in der Anlagestellung gemäß Figur 19 (lastarmer Zustand und punktueller Anlage der Anlageabschnitte 27 im Bereich der zugewandten Tangentialabschnitte 21) sich kupplungsmitnehmerseitig zwischen dem zugeordneten Tangentialabschnitt 21 und der zugewandten Übergangsfläche zwischen Mitnehmerspitze 15 und Teil 16 ein Spaltmaß a' einstellt, welches bevorzugt den zuvor beschriebenen Ausführungsbeispielen angepasst an den Überstand a etwa 0,4 bis 0,5 mm entspricht.

Auch in dieser Ausführungsform ist jedes Element 23 mit einem durchgehenden, sich parallel zur Achse x erstreckenden Hohlraum 32 versehen, der das elastische Ausweichen des den Anlageabschnitt 27 bildenden Materialabschnittes in der Hochlaststellung der Kupplung unterstützt.

### Bezugszeichenliste

- 1: Küchenmaschine
- 2: Gehäuse
- 3: Bedienfeld
- 4: Rührtopfaufnahme
- 5: Rührtopf
- 6: Rührwerk
- 7: Kupplung
- 8: Antriebswelle
- 9: Abtriebswelle 10 Topfboden
- 11: Öffnung
- 12: Festlegungsgehäuse
- 13: Ringkörper
- 14: Kupplungsmitnehmer
- 15: Mitnehmerspitze
- 15': Mitnehmerspitze
- 16: Tal
- 17: Fase
- 18: Kupplungsteil
- 19: Spitzenaufnahmebereich
- 20: Vorwölbung
- 21: Tangentialabschnitt
- 22: Spalt
- 23: Element
- 24: Halterungsabschnitt
- 25: Nut
- 26: Klebefläche

- 27: Anlageabschnitt
- 28: Ausdehnungsfreiraum
- 29: Zwickel
- 30: Oberseite
- 31: Unterseite
- 32: Hohlraum

- a: Überstand
- a': Spaltmaß
- b: Drehrichtung
- x: Rührwerkachse

- E: Dämpfungseinrichtung
- K: Anlagepunkt
- L: Kreislinie
- L': Kreislinie
- P: Druckkraft
- R: Radiale

- α: Winkel
- β: Winkel

## Patentansprüche

1. Elektromotorisch betriebene Küchenmaschine (1) mit einem Rührtopf (5) und einem darin angeordneten, eine Abtriebswelle (9) aufweisenden Rührwerk (6), wobei die Abtriebswelle (9) im Zuge des Einsetzens des Rührtopfes (5) mit einer, einer Rührtopfaufnahme (4) zugeordneten Antriebswelle (8) kuppelt und die Kupplung (7) durch eine im Querschnitt unrunde Ausbildung der zugeordneten Abschnitte der An- und Abtriebswelle (8,9) gebildet ist, **dadurch gekennzeichnet, dass** die An- und/oder Abtriebswelle (8, 9) im Kupplungsbereich eine in Umfangsrichtung mindestens zweistufig wirkende Dämpfungseinrichtung (E) aufweist, wobei die zweite, nach Überschreiten eines bestimmten Drehmoments in Wirkung kommende Stufe steifer ausgelegt ist als die erste Stufe, dass ein die erste Stufe bildendes Element (23) sich nur über einen Teilbereich des Umfangs der An- oder Abtriebswelle (8, 9) erstreckt und dass das die erste Stufe bildende Element (23) eine größere Vertikalerstreckung als Umfangserstreckung aufweist.

2. Küchenmaschine nach den Merkmalen des Oberbegriffs des Anspruches 1, **dadurch gekennzeichnet, dass** die An- und/ oder Abtriebswelle (8, 9) im Kupplungsbereich eine in Umfangsrichtung mindestens zweistufig wirkende Dämpfungseinrichtung (E) aufweist, wobei die zweite, nach Überschreiten eines bestimmten Drehmoments in Wirkung kommende Stufe steifer ausgelegt ist als die erste Stufe und das die erste Stufe bildende Element (23) unter Übernahme der Außenkontur, jedenfalls in vertikaler Richtung, parallel zu einer Achse der Antriebswelle, des die zweite Stufe bildenden Elements der Dämpfungseinrichtung (E), wenn auch zumindest teilweise in radialer Richtung vergrößert, bzw. verkleinert, zumindest einen Teil der Höhe der An- und/ oder Abtriebswelle (8, 9) im Kupplungsbereich ausbildet.

3. Küchenmaschine nach Anspruch 2, **dadurch gekennzeichnet, dass** das die erste Stufe bildende Element (23) eine größere Vertikalerstreckung als Umfangserstreckung aufweist.

4. Küchenmaschine nach Anspruch 1, **dadurch gekennzeichnet, dass** die beiden Kupplungsteile der An- und Abtriebswelle (8, 9) umfangsmäßig unterschiedliche Konturen aufweisen, die jeweils bezüglich einer gedachten Kreislinie (L, L') über den Umfang gleichmäßig wechselnd verlaufen unter Ausbildung von Minimal- und Maximalabstandsbereichen und dass das Element (23) der ersten Stufe in einem Umfangsüberdeckungsbereich der An- oder Abtriebswelle (8, 9) angeordnet ist, wobei jedoch in den Minimal- und Maximalabstandsbereichen keine Anlage erfolgt.

5. Küchenmaschine nach Anspruch 1 oder 4, **dadurch gekennzeichnet, dass** das Element (23) der ersten Stufe in einem Bereich angeordnet ist, in welchem die zugeordneten Flanken von An- und Abtriebswelle (8, 9) sich über den Einfederungsbereich praktisch nicht relativ zueinander verschieben.

6. Küchenmaschine nach einem der vorhergehenden Ansprüche, **dadurch gekennzeichnet, dass** die Berührung zwischen dem Element (23) der ersten Stufe und einem Gegenbereich der jeweils anderen Welle im Wesentlichen bezogen auf eine Halterung in Unterstützung der Halterung, das heißt bei einer Verklebung senkrecht zur Klebefläche (26) oder bei einer Steckhalterung derart, dass Druckkräfte (P) auf den Steckfortsatz ausgeübt werden, zentral erfolgt.

7. Küchenmaschine nach einem der Ansprüche 1 oder 4 bis 6, **dadurch gekennzeichnet, dass** das Element (23) der ersten Stufe streifenförmig, parallel zur Wellenachse (x) verlaufend angeordnet ist und/oder, dass das Element (23) der ersten Stufe im nicht beanspruchten Zustand mit Überstand zu umgebenden Bereichen der zweiten Stufe ausgebildet ist, wobei, bevorzugt, ein Überstandsmaß (a) 0,2 mm bis 1 mm beträgt.

8. Küchenmaschine nach einem der Ansprüche 1 oder 4 bis 7, **dadurch gekennzeichnet, dass** das Element (23) der ersten Stufe von einem Ausdehnungsfreiraum (28) umgeben ist, in das das Element (23) bei Beanspruchung ausweicht.

9. Küchenmaschine nach Anspruch 8, **dadurch gekennzeichnet, dass** der Ausdehnungsfreiraum (28) in dem steifer ausgelegten Bereich der Dämpfungseinrichtung (E) ausgebildet ist.

10. Küchenmaschine nach einem der vorhergehenden Ansprüche, **dadurch gekennzeichnet, dass** das Element (23) der ersten Stufe zugeordnet einer Mitnehmerspitze (15) als Hohlstruktur ausgebildet ist.

11. Küchenmaschine nach einem der vorhergehenden Ansprüche, **dadurch gekennzeichnet, dass** das Element (23) der ersten Stufe einen vertikal durchgehenden Hohlraum (32) aufweist und so beispielsweise schlauchartig ausgebildet ist.

12. Küchenmaschine nach einem der vorhergehenden Ansprüche, **dadurch gekennzeichnet, dass** die Elemente der ersten und zweiten Stufe steckverbunden sind.

13. Küchenmaschine nach einem der vorhergehenden Ansprüche, **dadurch gekennzeichnet, dass** die Elemente der ersten und zweiten Stufe im ZweiKomponenten-Spritzverfahren ausgebildet sind.

14. Küchenmaschine nach einem der Ansprüche 1 oder 4 bis 13, **dadurch gekennzeichnet, dass** über den Umfang abwechselnd eine Mitnehmerspitze (15, 15') über die vertikale Höhe vollständig als Element der ersten oder zweiten Stufe ausgebildet ist.

15. Küchenmaschine nach einem der Ansprüche 1 oder 4 bis 14, **dadurch gekennzeichnet, dass** von der Unter- und Oberseite (31, 30) der An- und/ oder Abtriebswelle (8, 9) ausgehend gegeneinander gerichtete Elemente (23) der ersten Stufe in dem Element zur Bildung der zweiten Stufe angeordnet sind.

## Claims

1. Electric-motor-driven food processor (1), comprising a mixing bowl (5) and a stirrer (6) arranged therein which has a driven shaft (9), said driven shaft (9) coupling to a drive shaft (8) associated with a mixing bowl receiver (4) during insertion of the mixing bowl (5), the coupling (7) being formed by a formation, which is uncircular in cross section, of the associated portions of the drive- and driven shafts (8, 9), **characterised in that** the drive- and/or driven shaft (8, 9) has a damping device (E) in the region of the coupling, said device functioning in at least two stages in a peripheral direction, the second stage, which comes into effect once a specific torque has been exceeded, being more rigid than the first stage, **in that** an element (23) forming the first stage extends over only a partial region of the periphery of the drive or driven shaft (8, 9), and **in that** the element (23) forming the first stage has a greater vertical extension than peripheral extension.

2. Food processor according to the features of the preamble of claim 1, **characterised in that** the drive- and/or driven shaft (8, 9) has a damping device (E) in the region of the coupling, said device functioning in at least two stages in a peripheral direction, the second stage, which comes into effect once a specific torque has been exceeded, being more rigid than the first stage, and the element (23) which forms the first stage forming at least part of the height of the drive- and/or driven shaft (8, 9) in the region of the coupling when said element forming the first stage assumes, in any case in a vertical direction, in parallel with an axis of the driven shaft, the outer contour of the element, forming the second stage, of the damping device (E), even if said element forming the first stage enlarges or reduces in size in a radial direction at least in part.

3. Food processor according to claim 2, **characterised in that** the element (23) forming the first stage has a greater vertical extension than peripheral extension.

4. Food processor according to claim 1, **characterised in that** the two coupling parts of the drive- and driven shaft (8, 9) have different contours over their peripheries, which each extend so as to regularly alternate over the periphery with respect to an imaginary circle (L, L') under formation of regions of minimum and maximum spacing, and **in that** the element (23) of the first stage is arranged in a region overlapping the periphery of the drive- or driven shaft (8, 9), although there is no contact in the regions of minimum and maximum spacing.

5. Food processor according to either claim 1 or claim 4, **characterised in that** the element (23) of the first stage is arranged in a region in which the associated flanks of the drive- and driven shaft (8, 9) barely move relative to one another over the deflection region.

6. Food processor according to any of the preceding claims, **characterised in that** contact between the element (23) of the first stage and an opposing region of the other shaft in each case, substantially based on a carrier in support of the carrier, that is to say in the case of bonding perpendicular to the adhesive surface (26), or in the case of a plug-in carrier such that compressive forces (P) are applied to the plug-in extension, occurs centrally.

7. Food processor according to any of claims 1 or 4 to 6, **characterised in that** the element (23) of the first stage is arranged in a strip shape parallel to the shaft axis (x), and/or in that, in an unstressed state, the element (23) of the first stage is configured so as to project into the surrounding regions of the second stage, a projection extent (a) of 0.2 mm to 1 mm being preferred.

8. Food processor according to any of claims 1 or 4 to 7, **characterised in that** the element (23) of the first stage is surrounded by an empty space (28) allowing for expansion, into which the element (23) extends when under stress.

9. Food processor according to claim 8, **characterised in that** the empty space (28) allowing for expansion is formed in the more rigid region of the damping device (E).

10. Food processor according to any of the preceding claims, **characterised in that** the element (23) of the first stage is formed as a hollow structure so as to be associated with a driving tip (15).

11. Food processor according to any of the preceding claims, **characterised in that** the element (23) of the first stage comprises a vertically continuous cavity (32) and is thus formed, for example, in the manner of a tube.

12. Food processor according to any of the preceding claims, **characterised in that** the elements of the first and second stage have a plug-type connection to each other.

13. Food processor according to any of the preceding claims, **characterised in that** the elements of the first and second stage are formed using the two component injection-moulding process.

14. Food processor according to any of claims 1 or 4 to 13, **characterised in that**, alternating over the periphery, a driving tip (15, 15') is entirely formed as an element of the first or second stage, over the vertical height.

15. Food processor according to any of claims 1 or 4 to 14, **characterised in that** elements (23) of the first stage extending from the bottom and top (31, 30) of the drive- and/or driven shaft (8, 9) and pointing towards each other are arranged in the element to form the second stage.

## Revendications

1. Appareil de cuisine entraîné par un moteur électrique (1) avec un récipient de mélange (5) et, agencé dans celui-ci, un arbre de sortie (9) comportant un mélangeur (6), dans lequel l'arbre de sortie (9) couple, au cours de l'insertion du récipient de mélange (5), avec une prise du bac à agitation (4) associée à un arbre d'entrée (8), et le couplage (7) est formé par une formation non ronde dans la section transversale des parties associées des arbres d'entrée et de sortie (8, 9), **caractérisé en ce que** par l'arbre d'entrée et / ou l'arbre de sortie (8, 9) comporte dans la zone de couplage un dispositif d'amortissement (E) agissant à au moins à deux niveaux dans la direction périphérique , dans lequel le deuxième niveau, qui arrive après le dépassement d'un certain couple de rotation, est rendu plus rigide que le premier niveau, **en ce que** l'élément (23) formant le premier niveau ne s'étend que sur une zone partielle de la circonférence de l'arbre d'entrée ou de sortie (8, 9) et **en ce que** l'élément (23) formant le premier niveau comporte une extension verticale plus grande que l'extension circonférentielle.

2. Appareil de cuisine selon les caractéristiques du préambule de la revendication 1 ou selon la revendication 1, **caractérisé en ce que** l'arbre d'entrée et / ou l'arbre de sortie (8, 9) comporte dans la zone de couplage un dispositif d'amortissement (E) agissant à au moins à deux niveaux dans la direction périphérique , dans lequel le deuxième niveau, qui arrive après le dépassement d'un certain couple de rotation, est rendu plus rigide que le premier niveau, dans lequel l'élément (23) formant le premier niveau reprenant le contour extérieur forme, parallèlement à un axe de l'arbre d'entrée de l'élément formant le second niveau du dispositif d'amortissement (E), dans tous les cas dans une direction verticale, au moins une partie de la hauteur de l'arbre d'entrée et / ou l'arbre de sortie (8, 9) dans la zone de couplage, quoique au moins augmenté, respectivement réduit, partiellement dans la direction radiale.

3. Appareil de cuisine selon la revendication 2, **caractérisé en ce que** l'élément (23) formant le premier niveau comporte une extension verticale plus grande que l'extension circonférentielle.

4. Appareil de cuisine selon la revendication 1, **caractérisé en ce que** les deux parties de couplage de l'arbre d'entrée et de l'arbre de sortie (8, 9) comportent des contours différents sur la circonférence qui s'étendent sur la circonférence en alternance régulière relativement à une ligne circulaire imaginaire (L, L'), en formant des zones de distance minimale et maximale, et **en ce que** l'élément (23) du premier niveau est disposé dans une zone de recouvrement périphérique de l'arbre d'entrée ou de sortie (8, 9), dans lequel pourtant aucun attachement n'est effectué dans les zones de distance minimale et maximale.

5. Appareil de cuisine selon la revendication 1 ou 4, **caractérisé en ce que** l'élément (23) du premier niveau est disposé dans une zone dans lequel les flancs respectifs de l'arbre d'entrée et de l'arbre de sortie (8, 9) ne se déplacent pratiquement pas l'un par rapport à l'autre sur une zone d'enfoncement.

6. Appareil de cuisine selon l'une des revendications précédentes, **caractérisé en ce que** le contact entre l'élément (23) du premier niveau et une contre-zone de l'autre arbre respectif se rapportant essentiellement à la fixation, c'est-à-dire à un collage perpendiculaire à la surface de collage (26) ou à une fixation par enfichage de telle sorte que les forces de compression (P) sont appliquées sur le prolongement de la fiche, s'effectue centralement dans un support de la fixation.

7. Appareil de cuisine selon l'une des revendications 1 ou 4 à 6, **caractérisé en ce que** l'élément (23) du premier niveau est disposé en forme de bande s'étendant parallèlement à l'axe d'arbre (x) et / ou **en ce que** l'élément (23) du premier niveau est formé en saillie sur les domaines avoisinants le deuxième niveau dans un état non sollicité, dans lequel, de préférence, une cote de saillie (a) s'élève de 0,2 mm à 1 mm.

8. Appareil de cuisine selon l'une des revendications 1 ou 4 à 7, **caractérisé en ce que** l'élément (23) du premier niveau est entouré d'une chambre libre de dilatation (28), **en ce que** l'élément (23) s'escamote sous l'effort.

9. Appareil de cuisine selon la revendication 8, **caractérisé en ce que** la chambre libre de dilatation (28) est formée dans la zone plus rigide du dispositif d'amortissement (E).

10. Appareil de cuisine selon l'une des revendications précédentes, **caractérisé en ce que** l'élément (23) du premier niveau est formé associé à une pointe d'entraînement (15) comme une structure creuse.

11. Appareil de cuisine selon l'une des revendications précédentes, **caractérisé en ce que** l'élément (23) du premier niveau comporte un espace creux traversant vertical (32) et est formé, par exemple, de façon tubulaire.

12. Appareil de cuisine selon l'une des revendications précédentes, **caractérisé en ce que** les éléments du premier et du deuxième niveau sont connectés par enfichage.

13. Appareil de cuisine selon l'une des revendications précédentes, **caractérisé en ce que** les éléments du premier et du deuxième niveau sont formés par un procédé de projection à deux composants.

14. Appareil de cuisine selon l'une des revendications 1 ou 4 à 13, **caractérisé en ce que** une pointe d'entraînement (15, 15') est formé en alternance sur la périphérie complètement sur la hauteur verticale comme un élément du premier ou du deuxième niveau.

15. Appareil de cuisine selon l'une des revendications 1 ou 4 à 14, **caractérisé en ce que** les éléments (23) orientés l'un contre l'autre en se finissant sur les côtés inférieurs et supérieurs (31, 30) de l'arbre d'entrée et / ou l'arbre de sortie (8, 9) sont disposés du premier niveau au deuxième niveau.
